# EUROPEAN PATENT APPLICATION

(11) **EP 4 340 164 A1**
(43) Date of publication of application: **20.03.2024**
(21) Application number: 22807081.9
(22) Date of filing: 25.02.2022
(51) Int. Cl.: H02J 7/00, H02J 1/00, A24F 47/00, A24F 40/40, A24F 40/50

(54) **POWER SUPPLY UNIT OF AEROSOL GENERATION DEVICE**

(30) Priority: 10.05.2021 JP 2021079912
(71) Applicant: Japan Tobacco, Inc., Tokyo, 105-6927 (JP)
(72) Inventor: AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/007931
(87) International publication number: WO 2022/239374

(57) **Abstract**

Provided is a power supply unit of an aerosol generation device capable of reducing power consumed in a sleep mode. An aspirator (100) is provided with: a power supply BAT; a heater connector Cn to which a heater HTR for heating a rod (500) by consuming power supplied from the power supply BAT is connected; an MCU1 configured to be able to control the supply of power from the power supply BAT to the heater HTR; and, thermistors T2-T4 which can be operated using a system power supply voltage Vcc3 generated from the power supply BAT and are electronic components separate from the MCU1. The aspirator (100) is configured to be operable in the sleep mode. When the aspirator (100) is operating in the sleep mode, the system power supply voltage Vcc3 is not supplied to the thermistors T2-T4.

## Description

### TECHNICAL FIELD

The present invention relates to a power supply unit for an aerosol generation device.

### BACKGROUND ART

Patent Literature 1 describes a smoking article packaged in a sleep mode such that power from a power supply cannot be delivered to a heating element. Patent Literature 2 describes a system in which a flow rate sensor 20 is driven in a low-frequency cycle in a sleep mode. Patent Literature 3 describes an electronic smoking device (e-cigarette) in which in a light sleep mode, a processor clock is turned down, and peripheral electronics and any other processes not necessary (for example, an LED) are turned off.

### CITATION LIST

### PATENT LITERATURE

Patent Literature 1: JP2019-193649A
Patent Literature 2: JP2019-071897A
Patent Literature 3: JP2019-526240A

### SUMMARY OF INVENTION

### TECHNICAL PROBLEM

From a viewpoint of improving user convenience, it is desired to reduce power consumed in a power supply unit for an aerosol generation device during a sleep mode. In the prior art, there is room for improvement in reducing the power consumed during the sleep mode.

The present invention provides a power supply unit for an aerosol generation device capable of reducing power consumed during a sleep mode.

### SOLUTION TO PROBLEM

The present invention is a power supply unit for an aerosol generation device configured to operate in a sleep mode, including:
a power supply;
a heater connector to which a heater configured to heat an aerosol source by consuming power supplied from the power supply is connected;
a controller configured to control a supply of the power from the power supply to the heater; and
a first electronic component configured to operate by a first accessory voltage generated from the power supply and separating from the controller, in which
the first accessory voltage is not supplied to the first electronic component when the power supply unit operates in the sleep mode.

### ADVANTAGEOUS EFFECTS OF INVENTION

According to the present invention, a power supply unit for an aerosol generation device capable of reducing power consumed during a sleep mode may be provided.

### BRIEF DESCRIPTION OF DRAWINGS

[Fig. 1] Fig. 1 is a perspective view of a non-combustion inhaler.
[Fig. 2] Fig. 2 is a perspective view of the non-combustion inhaler with a rod attached.
[Fig. 3] Fig. 3 is another perspective view of the non-combustion inhaler.
[Fig. 4] Fig. 4 is an exploded perspective view of the non-combustion inhaler.
[Fig. 5] Fig. 5 is a perspective view of an internal unit of the non-combustion inhaler.
[Fig. 6] Fig. 6 is an exploded perspective view of the internal unit of Fig. 5.
[Fig. 7] Fig. 7 is a perspective view of the internal unit with a power supply and a chassis removed.
[Fig. 8] Fig. 8 is another perspective view of the internal unit with the power supply and the chassis removed.
[Fig. 9] Fig. 9 is a schematic diagram for illustrating operation modes of the inhaler.
[Fig. 10] Fig. 10 is a diagram showing a schematic configuration of an electric circuit of the internal unit.
[Fig. 11] Fig. 11 is a diagram showing a schematic configuration of the electric circuit of the internal unit.
[Fig. 12] Fig. 12 is a diagram showing a schematic configuration of the electric circuit of the internal unit.
[Fig. 13] Fig. 13 is a diagram for illustrating an operation of the electric circuit in a sleep mode.
[Fig. 14] Fig. 14 is a diagram for illustrating an operation of the electric circuit in an active mode.
[Fig. 15] Fig. 15 is a diagram for illustrating an operation of the electric circuit in a heating initial setting mode.
[Fig. 16] Fig. 16 is a diagram for illustrating an operation of the electric circuit during heating of a heater in a heating mode.
[Fig. 17] Fig. 17 is a diagram for illustrating an operation of the electric circuit when a temperature of the heater is detected in the heating mode.
[Fig. 18] Fig. 18 is a diagram for illustrating an operation of the electric circuit in a charging mode.
[Fig. 19] Fig. 19 is a diagram for illustrating an operation of the electric circuit when an MCU is reset (restarted).

### DESCRIPTION OF EMBODIMENTS

Hereinafter, an inhalation system, which is an embodiment of an aerosol generation device of the present invention, will be described with reference to the drawings. The inhalation system includes a non-combustion inhaler 100 (hereinafter, also simply referred to as "inhaler 100"), which is an embodiment of a power supply unit of the present invention, and a rod 500 heated by the inhaler 100. In the following description, a configuration in which the inhaler 100 accommodates a heating portion in a non-detachable manner will be described as an example. However, the heating portion may be detachably provided to the inhaler 100. For example, the rod 500 and the heating portion may be integrated and detachably provided to the inhaler 100. That is, the power supply unit for the aerosol generation device may have a configuration that does not include the heating portion as a component. The term "non-detachable" refers to an aspect in which removal is not possible as far as an intended use is concerned. Alternatively, an induction heating coil provided in the inhaler 100 and a susceptor built in the rod 500 may cooperate to form the heating portion.

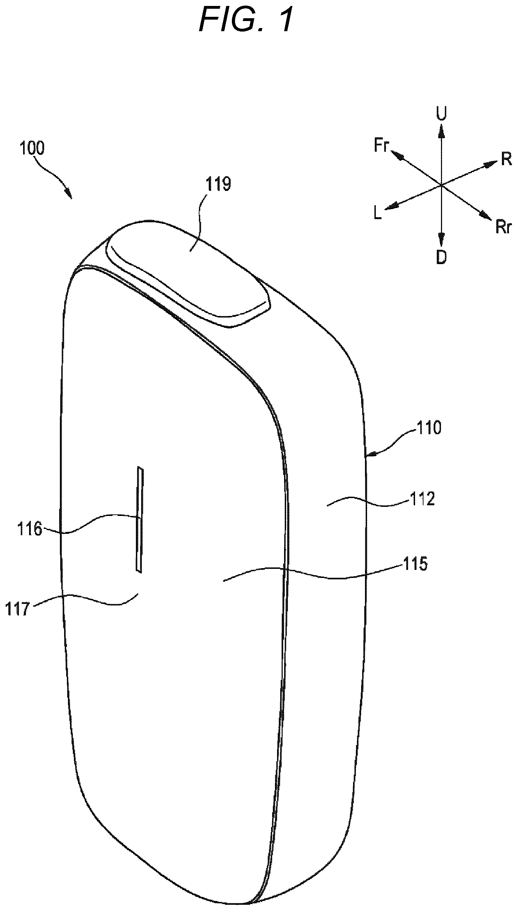

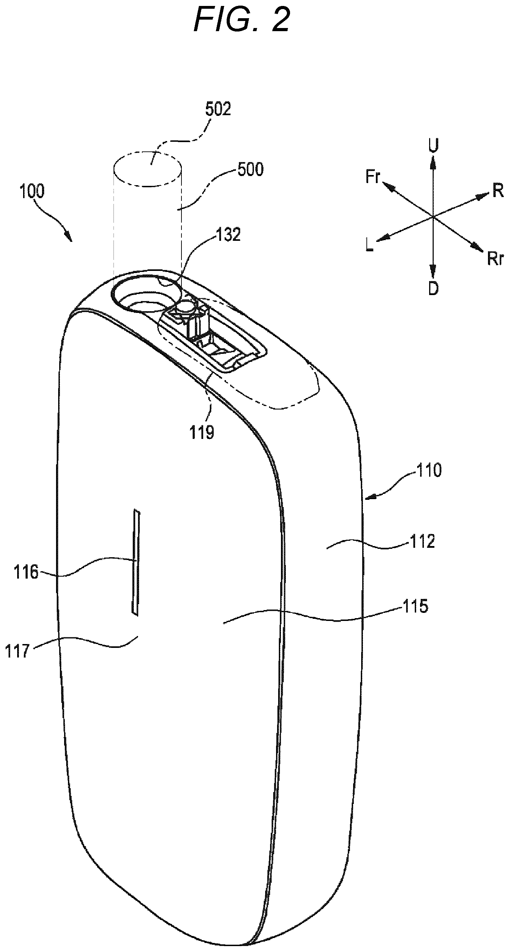

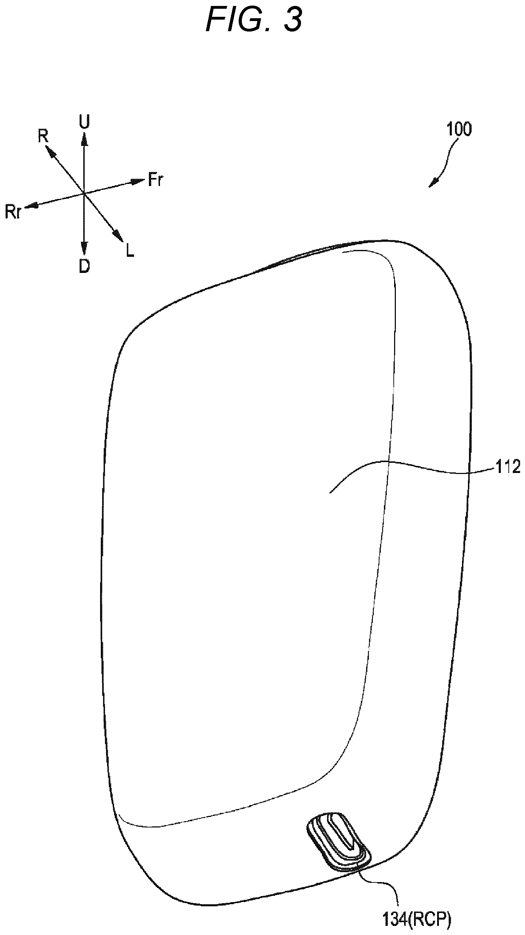

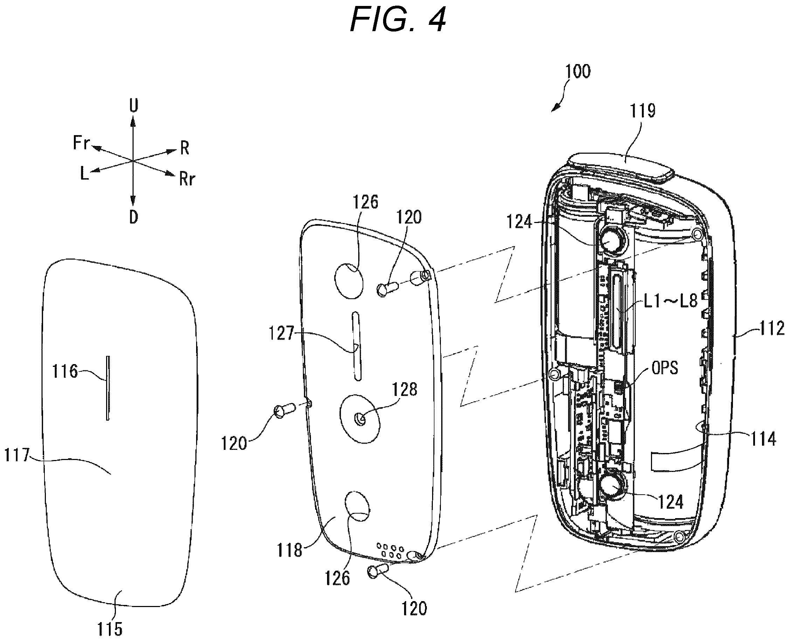

Fig. 1 is a perspective view showing a general configuration of the inhaler 100. Fig. 2 is a perspective view of the inhaler 100 with the rod 500 attached. Fig. 3 is another perspective view of the inhaler 100. Fig. 4 is an exploded perspective view of the inhaler 100. In the following description, for the sake of convenience, an orthogonal coordinate system in a three-dimensional space is used, in which three mutually orthogonal directions are a front-rear direction, a left-right direction, and an up-down direction. In the drawings, a front side is indicated by Fr, a rear side is indicated by Rr, a right side is indicated by R, a left side is indicated by L, an upper side is indicated by U, and a lower side is indicated by D.

The inhaler 100 is configured to generate an aerosol including a flavor by heating a substantially cylindrical rod 500 (see Fig. 2) which is elongated and is an example of a flavor component generating base-material having a filling article including an aerosol source and a flavor source.

### <Flavor Component Generating Base-Material (Rod)>

The rod 500 includes a filling article containing an aerosol source that is heated at a predetermined temperature to generate an aerosol.

A type of the aerosol source is not particularly limited, and may be selected from an extract originated from various natural products and/or constituents thereof depending on an application. The aerosol source may be solid or liquid, for example, polyhydric alcohols such as glycerin, propylene glycol, or water. The aerosol source may include a flavor source such as a tobacco raw material that releases a flavor component by heating, or an extract originated from a tobacco raw material. A gas to which the flavor component is added is not limited to the aerosol, and for example, invisible vapor may be generated.

The filling article of the rod 500 may contain shredded tobacco as a flavor source. A material of the shredded tobacco is not specifically limited, and publicly known material such as a lamina and a stem may be used as the material. The filling article may contain one kind or two or more kinds of flavors. The kinds of flavors are not specifically limited, however, in view of provision of satisfactory smoke flavor, a flavor is menthol, preferably. The flavor source may contain plants other than tobacco(for example, mints, herbal medicines, or herbs). The rod 500 may not contain the flavor source depending on uses.

### <Overall Configuration of Non-Combustion Inhaler>

Next, an overall configuration of the inhaler 100 will be described with reference to Figs. 1 to 4.

The inhaler 100 includes a substantially rectangular parallelepiped case 110 having a front surface, a rear surface, a left surface, a right surface, an upper surface, and a lower surface. The case 110 includes a bottomed cylindrical case body 112 in which the front surface, the rear surface, the upper surface, the lower surface, and the right surface are integrally formed, an outer panel 115 and an inner panel 118 that seal an opening 114 (see Fig. 4) of the case body 112 and constitute the left surface, and a slider 119.

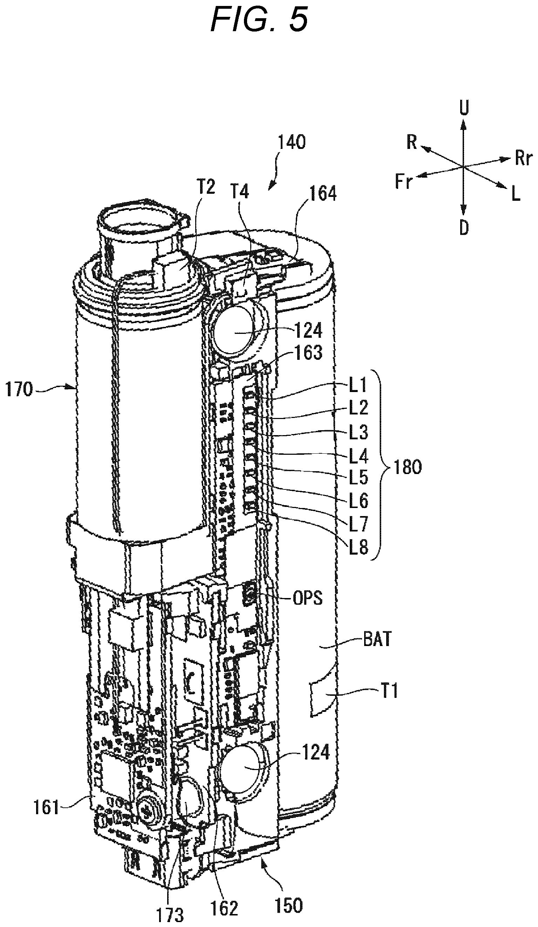

The inner panel 118 is fixed to the case body 112 with bolts 120. The outer panel 115 is fixed to the case body 112 so as to cover an outer surface of the inner panel 118 by magnets 124 held by a chassis 150 (see Fig. 5) accommodated in the case body 112 and described later. The outer panel 115 is fixed by the magnets 124, so that a user may replace the outer panel 115 according to his or her preference.

The inner panel 118 is provided with two through holes 126 through which the magnets 124 pass. The inner panel 118 is further provided with a longitudinally elongated hole 127 and a circular round hole 128 between the two vertically arranged through holes 126. The elongated hole 127 is for transmitting light emitted from eight light emitting diodes (LEDs) L1 to L8 built in the case body 112. A button-type operation switch OPS built in the case body 112 passes through the round hole 128. Accordingly, the user may detect the light emitted from the eight LEDs L1 to L8 through an LED window 116 of the outer panel 115. The user may press down the operation switch OPS via a pressing portion 117 of the outer panel 115.

As shown in Fig. 2, the upper surface of the case body 112 is provided with an opening 132 into which the rod 500 may be inserted. The slider 119 is coupled to the case body 112 in a manner of being movable in the front-rear direction between a position for closing the opening 132 (see Fig. 1) and a position for opening the opening 132 (see Fig. 2).

The operation switch OPS is used to perform various operations on the inhaler 100. For example, the user operates the operation switch OPS via the pressing portion 117 while the rod 500 is inserted into the opening 132 and is attached as shown in Fig. 2. Accordingly, a heating portion 170 (see Fig. 5) heats the rod 500 without burning the rod 500. When the rod 500 is heated, an aerosol is generated from the aerosol source included in the rod 500 and the flavor of the flavor source included in the rod 500 is added to the aerosol. The user may inhale the aerosol including a flavor by holding and inhaling a mouthpiece 502 of the rod 500 projecting from the opening 132.

As shown in Fig. 3, the lower surface of the case body 112 is provided with a charging terminal 134 for electrically connecting to an external power supply such as an outlet or a mobile battery to receive power supply. In the present embodiment, the charging terminal 134 is a universal serial bus (USB) Type-C receptacle, but is not limited thereto. The charging terminal 134 is hereinafter also referred to as a receptacle RCP

The charging terminal 134 may include, for example, a power receiving coil, and may be configured to receive power transmitted from an external power supply without contact. A wireless power transfer method in this case may be an electromagnetic induction type, a magnetic resonance type, or a combination of the electromagnetic induction type and the magnetic resonance type. As another example, the charging terminal 134 may be connectable to various USB terminals or the like, and may include the power receiving coil described above.

The configuration of the inhaler 100 shown in Figs. 1 to 4 is merely an example. The inhaler 100 may be configured in various aspects such that by holding the rod 500 and adding an action such as heating, a gas added with a flavor component is generated from the rod 500, and the user may inhale the generated gas.

### <Internal Configuration of Non-Combustion Inhaler>

An internal unit 140 of the inhaler 100 will be described with reference to Figs. 5 to 8.

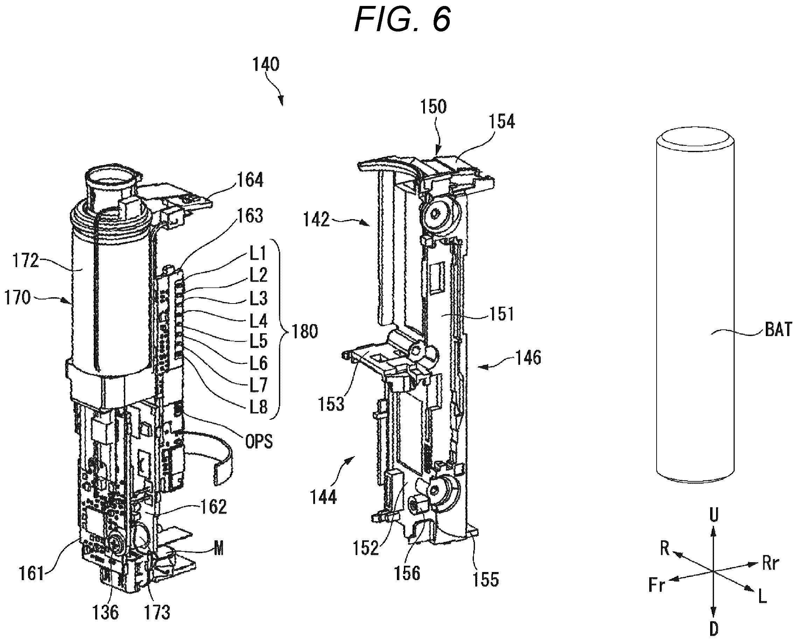

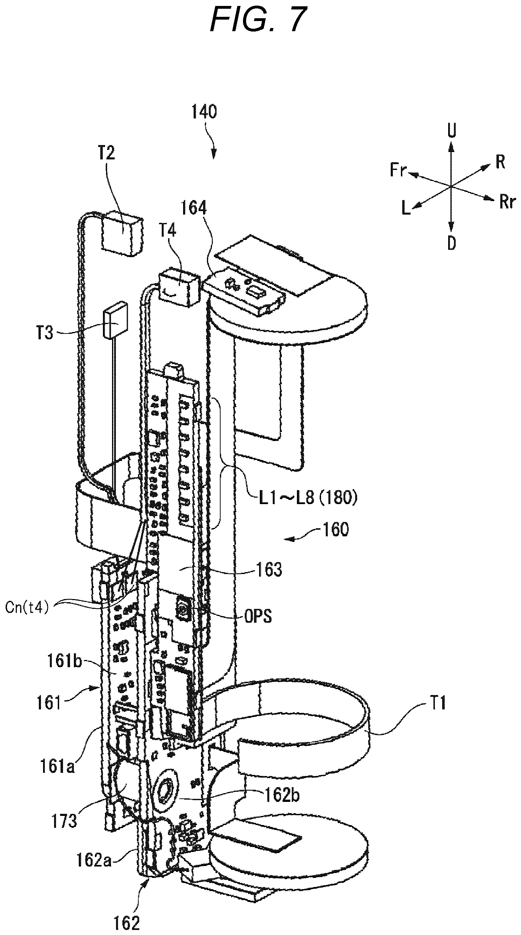

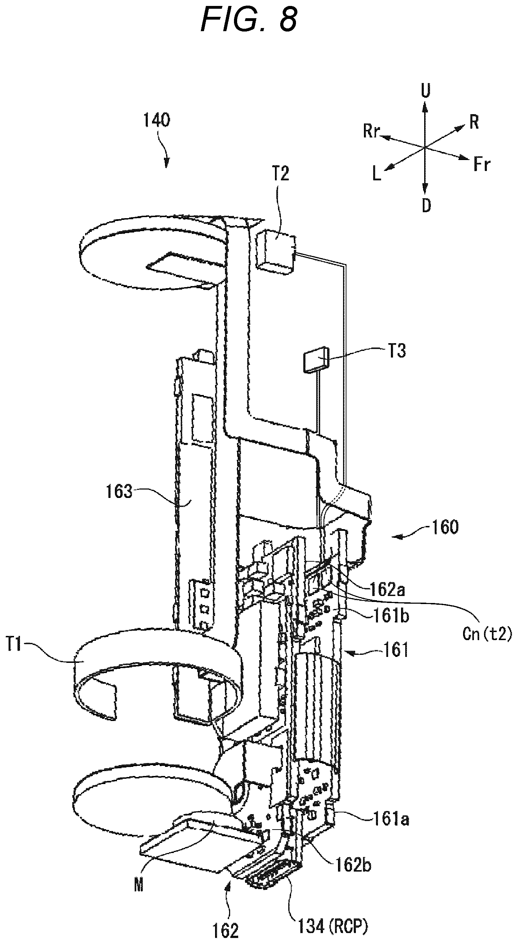

Fig. 5 is a perspective view of the internal unit 140 of the inhaler 100. Fig. 6 is an exploded perspective view of the internal unit 140 of Fig. 5. Fig. 7 is a perspective view of the internal unit 140 with a power supply BAT and the chassis 150 removed. Fig. 8 is another perspective view of the internal unit 140 with the power supply BAT and the chassis 150 removed.

The internal unit 140 accommodated in an internal space of the case 110 includes the chassis 150, the power supply BAT, a circuit portion 160, the heating portion 170, a notification portion 180, and various sensors.

The chassis 150 includes a plate-shaped chassis body 151 disposed substantially in a center of the internal space of the case 110 in the front-rear direction and extending in the up-down direction and the front-rear direction, a plate-shaped front-rear dividing wall 152 disposed substantially in the center of the internal space of the case 110 in the front-rear direction and extending in the up-down direction and the left-right direction, a plate-shaped upper-lower dividing wall 153 extending forward from substantially the center in the up-down direction of the front-rear dividing wall 152, a plate-shaped chassis upper wall 154 extending rearward from upper edges of the front-rear dividing wall 152 and the chassis body 151, and a plate-shaped chassis lower wall 155 extending rearward from lower edges of the front-rear dividing wall 152 and the chassis body 151. A left surface of the chassis body 151 is covered with the inner panel 118 and the outer panel 115 of the case 110 described above.

The internal space of the case 110 is defined by the chassis 150 such that a heating portion accommodation region 142 is formed in an upper front portion, a board accommodation region 144 is formed in a lower front portion, and a power supply accommodation space 146 is formed in a rear portion in the up-down direction.

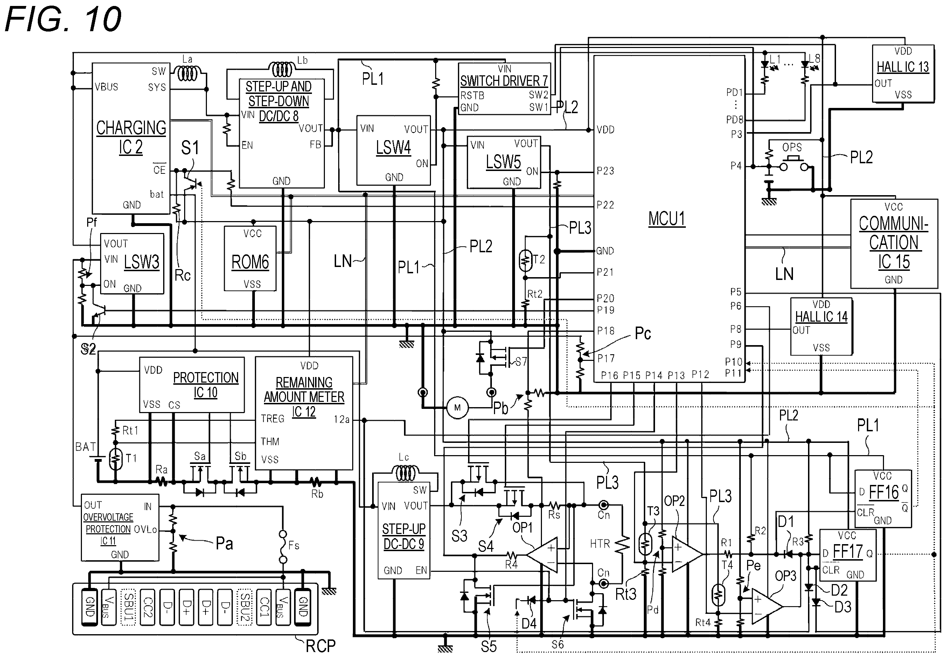

The heating portion 170 accommodated in the heating portion accommodation region 142 is implemented by a plurality of tubular members, the tubular members are arranged concentrically to form a tubular body as a whole. The heating portion 170 includes a rod accommodation portion 172 capable of accommodating a part of the rod 500 therein, and a heater HTR (see Figs. 10 to 19) that heats the rod 500 from outer circumference or center. Preferably, a surface of the rod accommodation portion 172 and the heater HTR are insulated by implementing the rod accommodation portion 172 by a heat insulation material or providing a heat insulation material inside the rod accommodation portion 172. The heater HTR may be any element that can heat the rod 500. The heater HTR is, for example, a heating element. Examples of the heating element include a heating resistor, a ceramic heater, and an induction heater. As the heater HTR, for example, one having positive temperature coefficient (PTC) characteristics in which a resistance value increases as a temperature increases is preferably used. Instead, a heater HTR having negative temperature coefficient (NTC) characteristics in which a resistance value decreases as a temperature increases may be used. The heating portion 170 has a function of defining a flow path of air to be supplied to the rod 500 and a function of heating the rod 500. The case 110 is formed with a vent (not shown) for introducing air, and is configured to allow air to enter the heating portion 170.

The power supply BAT accommodated in the power supply accommodation space 146 is a rechargeable secondary battery, an electric double layer capacitor, or the like, preferably a lithium ion secondary battery. An electrolyte of the power supply BAT may be implemented by one or a combination of a gel electrolyte, an electrolyte solution, a solid electrolyte, and an ionic liquid.

The notification portion 180 notifies various types of information such as state of charge (SOC) indicating a charge state of the power supply BAT, a preheating time when inhaling, a possible inhalation period, and the like. The notification portion 180 according to the present embodiment includes the eight LEDs L1 to L8 and a vibration motor M. The notification portion 180 may be implemented by light emitting elements such as the LEDs L1 to L8, may be implemented by a vibration element such as the vibration motor M, or may be implemented by a sound output element. The notification portion 180 may be a combination of two or more elements selected from the light emitting element, the vibration element, and the sound output element.

The various sensors include an intake sensor that detects a puff operation (inhalation operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, and a panel detection sensor that detects attachment and detachment of the outer panel 115.

The intake sensor mainly includes a thermistor T2 disposed in the vicinity of the opening 132, for example. The power supply temperature sensor mainly includes a thermistor T1 disposed in the vicinity of the power supply BAT, for example. The heater temperature sensor mainly includes a thermistor T3 disposed in the vicinity of the heater HTR, for example. As described above, the rod accommodation portion 172 is preferably insulated from the heater HTR. In this case, the thermistor T3 is preferably in contact with or close to the heater HTR inside the rod accommodation portion 172. When the heater HTR has the PTC characteristics or the NTC characteristics, the heater HTR itself may be used as the heater temperature sensor. The case temperature sensor mainly includes a thermistor T4 disposed in the vicinity of the left surface of the case 110, for example. The cover position sensor mainly includes a Hall IC 14 including a Hall element disposed in the vicinity of the slider 119. The panel detection sensor mainly includes a Hall IC 13 including a Hall element disposed in the vicinity of an inner surface of the inner panel 118.

The circuit portion 160 includes four circuit boards, a plurality of integrate circuits (ICs), and a plurality of elements. The four circuit boards include a micro controller unit (MCU) mounting board 161 on which mainly an MCU 1 and a charging IC 2 described later are disposed, a receptacle mounting board 162 on which mainly the charging terminal 134 is disposed, an LED mounting board 163 on which the operation switch OPS, the LEDs L1 to L8, and a communication IC 15 described later are disposed, and a Hall IC mounting board 164 on which the Hall IC 14 described later and including the Hall element constituting the cover position sensor is disposed.

The MCU mounting board 161 and the receptacle mounting board 162 are arranged parallel to each other in the board accommodation region 144. More specifically, the MCU mounting board 161 and the receptacle mounting board 162 are disposed such that element disposing surfaces thereof are disposed along the left-right direction and the up-down direction, and the MCU mounting board 161 is disposed in front of the receptacle mounting board 162. Each of the MCU mounting board 161 and the receptacle mounting board 162 is provided with an opening. The MCU mounting board 161 and the receptacle mounting board 162 are fastened with a bolt 136 to a board fixing portion 156 of the front-rear dividing wall 152 with a cylindrical spacer 173 interposed between peripheral edges of these openings. That is, the spacer 173 fixes positions of the MCU mounting board 161 and the receptacle mounting board 162 inside the case 110, and mechanically connects the MCU mounting board 161 and the receptacle mounting board 162. Accordingly, it is possible to prevent that the MCU mounting board 161 and the receptacle mounting board 162 come into contact with each other and a short-circuit current occurs between the MCU mounting board 161 and the receptacle mounting board 162.

For the sake of convenience, when front-facing surfaces of the MCU mounting board 161 and the receptacle mounting board 162 are respectively designated as main surfaces 161a and 162a, and surfaces opposite to the main surfaces 161a and 162a are respectively designated as secondary surfaces 161b and 162b, the secondary surface 161b of the MCU mounting board 161 and the main surface 162a of the receptacle mounting board 162 face each other with a predetermined gap therebetween. The main surface 161a of the MCU mounting board 161 faces the front surface of the case 110, and the secondary surface 162b of the receptacle mounting board 162 faces the front-rear dividing wall 152 of the chassis 150. Elements and ICs mounted on the MCU mounting board 161 and the receptacle mounting board 162 will be described later.

The LED mounting board 163 is disposed on a left side surface of the chassis body 151 and between the two magnets 124 arranged vertically. The element disposing surface of the LED mounting board 163 is disposed along the up-down direction and the front-rear direction. In other words, the element disposing surfaces of the MCU mounting board 161 and the receptacle mounting board 162 are orthogonal to the element disposing surface of the LED mounting board 163. In this way, the element disposing surfaces of the MCU mounting board 161 and the receptacle mounting board 162 and the element disposing surface of the LED mounting board 163 are not limited to being orthogonal, but preferably intersect (not parallel). The vibration motor M constituting the notification portion 180 together with the LEDs L1 to L8 is fixed to the lower surface of the chassis lower wall 155 and electrically connected to the MCU mounting board 161.

The Hall IC mounting board 164 is disposed on an upper surface of the chassis upper wall 154.

### <Operation Modes of Inhaler>

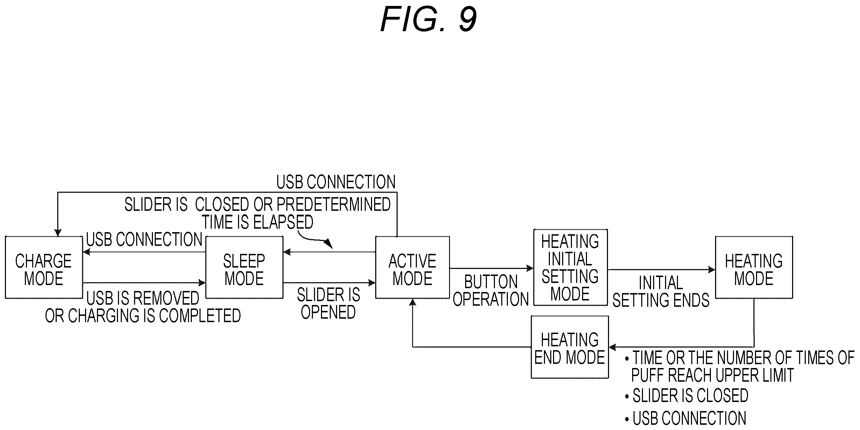

Fig. 9 is a schematic diagram for illustrating operation modes of the inhaler 100. As shown in Fig. 9, the operation modes of the inhaler 100 include a charging mode, a sleep mode, an active mode, a heating initial setting mode, a heating mode, and a heating end mode.

The sleep mode is a mode in which power saving is achieved by mainly stopping power supply to electronic components necessary for a heating control of the heater HTR.

The active mode is a mode in which most functions other than the heating control of the heater HTR are enabled. In a state where the inhaler 100 operates in the sleep mode, when the slider 119 is opened, the operation mode is switched to the active mode. In a state where the inhaler 100 operates in the active mode, when the slider 119 is closed or a non-operation time of the operation switch OPS reaches a predetermined time, the operation mode is switched to the sleep mode.

The heating initial setting mode is a mode in which an initial setting of control parameters and the like for starting the heating control of the heater HTR is performed. In the state where the inhaler 100 operates in the active mode, when an operation of the operation switch OPS is detected, the operation mode is switched to the heating initial setting mode, and when the initial setting is completed, the operation mode is switched to the heating mode.

The heating mode is a mode in which the heating control (a heating control for aerosol generation and a heating control for temperature detection) of the heater HTR is executed. When the operation mode is switched to the heating mode, the inhaler 100 starts the heating control of the heater HTR.

The heating end mode is a mode in which an end processing (a storing processing of a heating history or the like) of the heating control of the heater HTR is executed. In a state where the inhaler 100 operates in the heating mode, when an energization time of the heater HTR or the number of times of inhalation by the user reaches an upper limit or the slider 119 is closed, the operation mode is switched to the heating end mode, and when the end processing ends, the operation mode is switched to the active mode. In the state where the inhaler 100 operates in the heating mode, when USB connection is established, the operation mode is switched to the heating end mode, and when the end processing is ended, the operation mode is switched to the charging mode. As shown in Fig. 9, in this case, the operation mode may be switched to the active mode before the operation mode is switched to the charging mode. In other words, in the state where the inhaler 100 operates in the heating mode, when the USB connection is established, the operation mode may be switched to the heating end mode, the active mode, and the charging mode in order

The charging mode is a mode in which the power supply BAT is charged with power supplied from an external power supply connected to the receptacle RCP. In the state where the inhaler 100 operates in the sleep mode or the active mode, when the external power supply is connected (connected by USB) to the receptacle RCP, the operation mode is switched to the charging mode. In the state where the inhaler 100 operates in the charging mode, when the charging of the power supply BAT ends, or when connection between the receptacle RCP and the external power supply is released, the operation mode is switched to the sleep mode.

### <Outline of Circuit of Internal Unit>

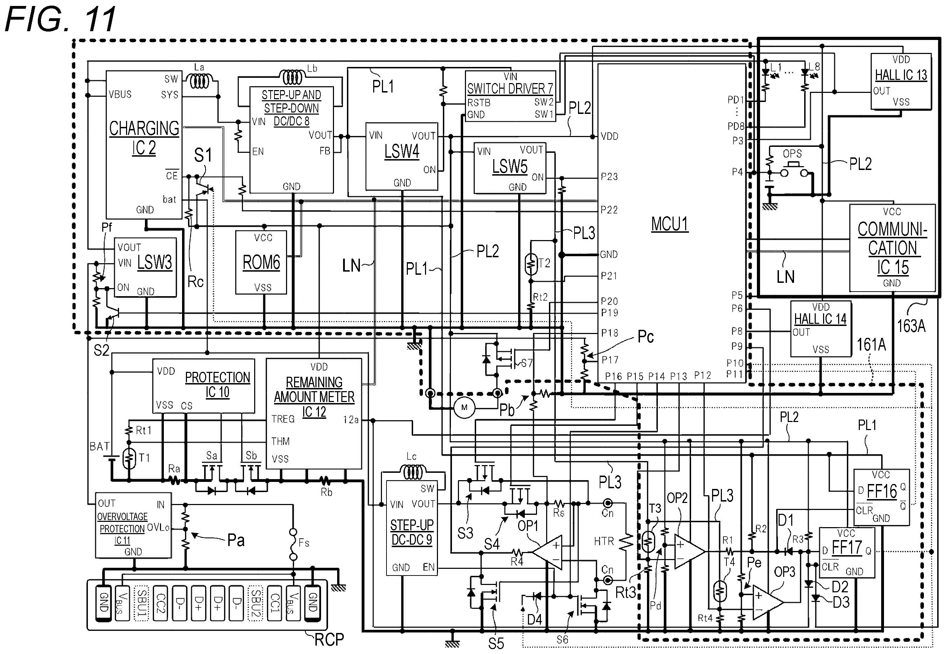

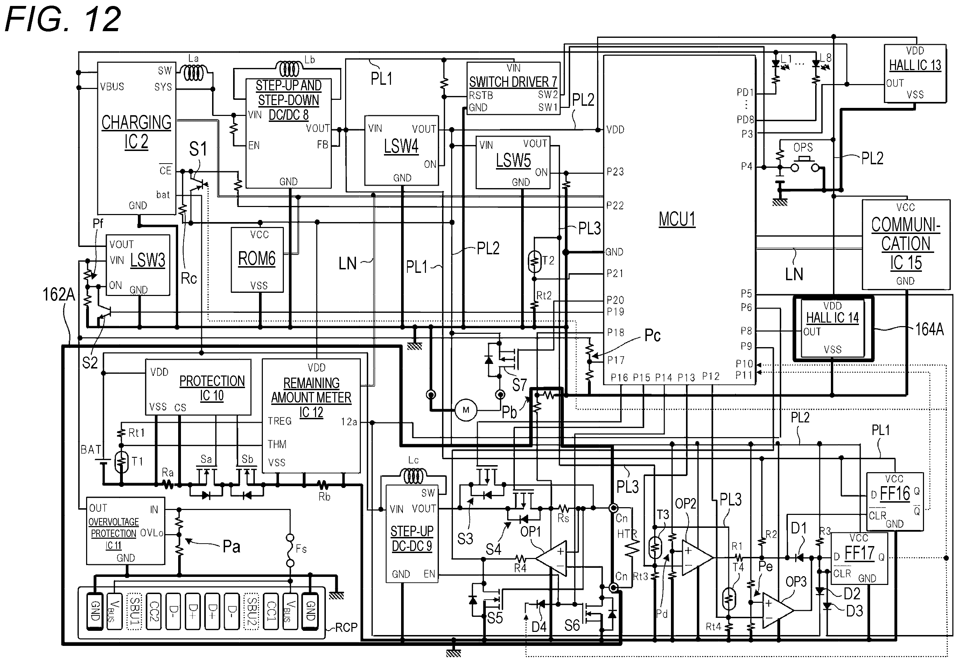

Figs. 10, 11, and 12 are diagrams showing a schematic configuration of an electric circuit of the internal unit 140. Fig. 11 is the same as Fig. 10 except that a range 161A mounted on the MCU mounting board 161 (range surrounded by a thick broken line) and a range 163A mounted on the LED mounting board 163 (range surrounded by a thick solid line) are added to the electric circuit shown in Fig. 10. Fig. 12 is the same as Fig. 10 except that a range 162A mounted on the receptacle mounting board 162 and a range 164A mounted on the Hall IC mounting board 164 are added to the electric circuit shown in Fig. 10.

Each of wires indicated by a thick solid line in Fig. 10 is a wire (a wire connected to the ground provided in the internal unit 140) that has the same potential as reference potential (ground potential) of the internal unit 140, and this wire is hereinafter referred to as a ground line. In Fig. 10, an electronic component in which a plurality of circuit elements are formed into a chip is indicated by a rectangle, and reference numerals of various terminals are described inside the rectangle. A power supply terminal VCC and a power supply terminal VDD mounted on the chip indicate power supply terminals on a high potential side. A power supply terminal VSS and a ground terminal GND mounted on the chip indicate power supply terminals on a low potential side (a reference potential side). In the electronic component formed into a chip, a difference between potential of the power supply terminal on the high potential side and potential of the power supply terminal on the low potential side is a power supply voltage supplied to the electronic component. The electronic component formed into a chip executes various functions by using the power supply voltage.

As shown in Fig. 11, the MCU mounting board 161 (the range 161A) is provided with, as main electronic components, the MCU 1 that performs an overall control on the entire inhaler 100, the charging IC 2 that performs a charging control on the power supply BAT, load switches (hereinafter, LSWs) 3, 4, and 5 configured by combining a capacitor, a resistor, a transistor, and the like, a read only memory (ROM) 6, a switch driver 7, a step-up and step-down DC/DC converter 8 (referred to as step-up and step-down DC/DC 8 in the drawing), an operational amplifier OP2, an operational amplifier OP3, flip-flops (hereinafter, FF) 16 and 17, a connector Cn (t2) electrically connected to the thermistor T2 that constitutes the intake sensor (referred to as the thermistor T2 connected to this connector in the drawing), a connector Cn (t3) electrically connected to the thermistor T3 that constitutes the heater temperature sensor (referred to as the thermistor T3 connected to this connector in the drawing), a connector Cn (t4) electrically connected to the thermistor T4 that constitutes the case temperature sensor (referred to as the thermistor T4 connected to this connector in the drawing), and a voltage divider circuit Pc for USB connection detection.

A ground terminal GND of each of the charging IC 2, the LSW 3, the LSW 4, the LSW 5, the switch driver 7, the step-up and step-down DC/DC converter 8, the FF 16, and the FF 17 is connected to the ground line. A power supply terminal VSS of the ROM 6 is connected to the ground line. A negative power supply terminal of each of the operational amplifier OP2 and the operational amplifier OP3 is connected to the ground line.

As shown in Fig. 11, the LED mounting board 163 (the range 163A) is provided with, as main electronic components, the Hall IC 13 including the Hall element that constitutes the panel detection sensor, the LEDs L1 to L8, the operation switch OPS, and the communication IC 15. The communication IC 15 is a communication module for communicating with an electronic device such as a smartphone. Each of a power supply terminal VSS of the Hall IC 13 and a ground terminal GND of the communication IC 15 is connected to the ground line. The communication IC 15 and the MCU 1 are configured to be communicated with each other through a communication line LN. One end of the operation switch OPS is connected to the ground line, and the other end of the operation switch OPS is connected to a terminal P4 of the MCU 1.

As shown in Fig. 12, the receptacle mounting board 162 (the range 162A) is provided with, as main electronic components, a power supply connector electrically connected to the power supply BAT(referred to as the power supply BAT connected to the power supply connector in the drawing), a connector electrically connected to the thermistor T1 that constitutes the power supply temperature sensor (referred to as the thermistor T1 connected to this connector in the drawing), a step-up DC/DC converter 9 (referred to as step-up DC/DC 9 in the drawing), a protection IC 10, an overvoltage protection IC 11, a remaining amount meter IC 12, the receptacle RCP, switches S3 to S6 implemented by MOSFETs, an operational amplifier OP 1, and a pair of (positive electrode side and negative electrode side) heater connectors Cn electrically connected to the heater HTR.

Two ground terminals GND of the receptacle RCP, a ground terminal GND of the step-up DC/DC converter 9, a power supply terminal VSS of the protection IC 10, a power supply terminal VSS of the remaining amount meter IC 12, a ground terminal GND of the overvoltage protection IC 11, and a negative power supply terminal of the operational amplifier OP1 are connected to the ground line.

As shown in Fig. 12, the Hall IC mounting board 164 (the range 164A) is provided with the Hall IC 14 including the Hall element that constitutes the cover position sensor. A power supply terminal VSS of the Hall IC 14 is connected to the ground line. An output terminal OUT of the Hall IC 14 is connected to a terminal P8 of the MCU 1. The MCU 1 detects opening and closing of the slider 119 based on a signal input to the terminal P8.

As shown in Fig. 11, a connector electrically connected to the vibration motor M is provided on the MCU mounting board 161.

### <Detail of Circuit of Internal Unit>

Hereinafter, a connection relationship and the like of electronic components will be described with reference to Fig. 10.

Two power supply input terminals V_{BUS} of the receptacle RCP are connected to an input terminal IN of the overvoltage protection IC 11 via a fuse Fs. When a USB plug is connected to the receptacle RCP and a USB cable including the USB plug is connected to the external power supply, a USB voltage V_{USB} is supplied to the two power supply input terminals V_{BUS} of the receptacle RCP.

One end of a voltage divider circuit Pa including a series circuit of two resistors is connected to the input terminal IN of the overvoltage protection IC 11. The other end of the voltage divider circuit Pa is connected to the ground line. A connection point between the two resistors that constitute the voltage divider circuit Pa is connected to a voltage detection terminal OVLo of the overvoltage protection IC 11. In a state where a voltage input to the voltage detection terminal OVLo is less than a threshold, the overvoltage protection IC 11 outputs a voltage input to the input terminal IN from the output terminal OUT. When the voltage input to the voltage detection terminal O VLo is equal to or higher than the threshold (the overvoltage), the overvoltage protection IC 11 protects electronic components downstream of the overvoltage protection IC 11 by stopping a voltage output from the output terminal OUT (cutting off an electrical connection between the LSW 3 and the receptacle RCP). The output terminal OUT of the overvoltage protection IC 11 is connected to an input terminal VIN of the LSW 3 and one end of a voltage divider circuit Pc (a series circuit of two resistors) connected to the MCU 1. The other end of the voltage divider circuit Pc is connected to the ground line. A connection point between the two resistors that constitute the voltage divider circuit Pc is connected to a terminal P17 of the MCU 1.

One end of a voltage divider circuit Pf including a series circuit of two resistors is connected to the input terminal VIN of the LSW 3. The other end of the voltage divider circuit Pf is connected to the ground line. A connection point between the two resistors that constitute the voltage divider circuit Pf is connected to a control terminal ON of the LSW 3. A collector terminal of a bipolar transistor S2 is connected to the control terminal ON of the LSW 3. An emitter terminal of the bipolar transistor S2 is connected to the ground line. A base terminal of the bipolar transistor S2 is connected to a terminal P19 of the MCU 1. When a signal input to the control terminal ON is a high level, the LSW 3 outputs a voltage input to the input terminal VIN from an output terminal VOUT. The output terminal VOUT of the LSW 3 is connected to an input terminal VBUS of the charging IC 2.

The MCU 1 turns on the bipolar transistor S2 while the USB connection is not established. Accordingly, since the control terminal ON of the LSW 3 is connected to the ground line via the bipolar transistor S2, a low-level signal is input to the control terminal ON of the LSW 3.

When the USB connection is established, the bipolar transistor S2 connected to the LSW 3 is turned off by the MCU 1. When the bipolar transistor S2 is turned off, the USB voltage V_{USB} divided by the voltage divider circuit Pf is input to the control terminal ON of the LSW 3. Therefore, when the USB connection is established and the bipolar transistor S2 is turned off, a high-level signal is input to the control terminal ON of the LSW 3. Accordingly, the LSW 3 outputs the USB voltage V_{USB} supplied from the USB cable from the output terminal VOUT. Even when the USB connection is established in a state where the bipolar transistor S2 is not turned off, the control terminal ON of the LSW 3 is connected to the ground line via the bipolar transistor S2. Therefore, it should be noted that a low-level signal continues to be input to the control terminal ON of the LSW 3 unless the MCU 1 turns off the bipolar transistor S2.

A positive electrode terminal of the power supply BAT is connected to a power supply terminal VDD of the protection IC 10, an input terminal VIN of the step-up DC/DC converter 9, and a charging terminal bat of the charging IC 2. Therefore, a power supply voltage V_{BAT} of the power supply BAT is supplied to the protection IC 10, the charging IC 2, and the step-up DC/DC converter 9. A resistor Ra, a switch Sa implemented by a MOSFET, a switch Sb implemented by a MOSFET, and a resistor Rb are connected in series in this order to a negative electrode terminal of the power supply BAT. A current detection terminal CS of the protection IC 10 is connected to a connection point between the resistor Ra and the switch Sa. A control terminal of each of the switch Sa and the switch Sb is connected to the protection IC 10. Both ends of the resistor Rb are connected to the remaining amount meter IC 12.

The protection IC 10 acquires a value of a current that flows to the resistor Ra when the power supply BAT is charged and discharged from a voltage input to the current detection terminal CS, and when the current value becomes excessive (overcurrent), the protection IC 10 performs an opening and closing control on the switch Sa and the switch Sb to stop charging or discharging of the power supply BAT, so that the power supply BAT is protected. More specifically, in a case of acquiring the excessive current value when charging the power supply BAT, the protection IC 10 stops the charging of the power supply BAT by turning off the switch Sb. In a case of acquiring the excessive current value when discharging the power supply BAT, the protection IC 10 stops the discharging of the power supply BAT by turning off the switch Sa. When a voltage value of the power supply BAT is abnormal (in a case of overcharging or overvoltage) from a voltage input to the power supply terminal VDD, the protection IC 10 performs the opening and closing control on the switch Sa and the switch Sb to stop the charging or discharging of the power supply BAT, so that the power supply BAT is protected. More specifically, when the overcharging of the power supply BAT is detected, the protection IC 10 stops the charging of the power supply BAT by turning off the switch Sb. When the overdischarging of the power supply BAT is detected, the protection IC 10 stops the discharging of the power supply BAT by turning off the switch Sa.

A resistor Rt1 is connected to a connector connected to the thermistor T 1 disposed in the vicinity of the power supply BAT. A series circuit of the resistor Rt1 and the thermistor T1 is connected to the ground line and a regulator terminal TREG of the remaining amount meter IC 12. A connection point between the thermistor T1 and the resistor Rt1 is connected to a thermistor terminal THM of the remaining amount meter IC 12. The thermistor T 1 may be a positive temperature coefficient (PTC) thermistor whose resistance value increases with an increase in a temperature, or may be a negative temperature coefficient (NTC) thermistor whose resistance value decreases with an increase in a temperature.

The remaining amount meter IC 12 detects a current that flows to the resistor Rb, and derives battery information such as a remaining capacity of the power supply BAT, a state of charge (SOC) indicating a charge state, and a state of health (SOH) indicating a health state based on a detected current value. The remaining amount meter IC 12 supplies a voltage from a built-in regulator connected to the regulator terminal TREG to a voltage divider circuit of the thermistor T 1 and the resistor Rt1. The remaining amount meter IC 12 acquires a voltage divided by the voltage divider circuit from the thermistor terminal THM, and acquires temperature information related to a temperature of the power supply BAT based on the voltage. The remaining amount meter IC 12 is connected to the MCU 1 by the communication line LN for performing serial communication, and is configured to communicate with the MCU 1. The remaining amount meter IC 12 transmits the derived battery information and the acquired temperature information of the power supply BAT to the MCU 1 in response to a request from the MCU 1. In order to perform the serial communication, a plurality of signal lines such as a data line for data transmission and a clock line for synchronization are required. It should be noted that only one signal line is shown in Figs. 10 to 19 for simplification.

The remaining amount meter IC 12 includes a notification terminal 12a. The notification terminal 12a is connected to a terminal P6 of the MCU 1 and a cathode of a diode D2 described later. When an abnormality such as an excessive temperature of the power supply BAT is detected, the remaining amount meter IC 12 outputs a low-level signal from the notification terminal 12a to notify the MCU 1 of occurrence of the abnormality. The low-level signal is also input to a CLR ( ) terminal of the FF 17 via the diode D2.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 performs an on and off control on a built-in transistor connected to the switching terminal SW to step up an input voltage and output the stepped-up voltage from the output terminal VOUT. The input terminal VIN of the step-up DC/DC converter 9 constitutes a power supply terminal of the step-up DC/DC converter 9 on a high potential side. When a signal input to an enable terminal EN is at a high level, the step-up DC/DC converter 9 performs a step-up operation. In a USB-connected state, the signal input to the enable terminal EN of the step-up DC/DC converter 9 may be controlled to a low level by the MCU 1. Alternatively, in the USB-connected state, the MCU 1 may not control the signal input to the enable terminal EN of the step-up DC/DC converter 9, so that potential of the enable terminal EN is made indefinite.

A source terminal of the switch S4 implemented by a P-channel MOSFET is connected to the output terminal VOUT of the step-up DC/DC converter 9. A gate terminal of the switch S4 is connected to a terminal P15 of the MCU 1. One end of a resistor Rs is connected to a drain terminal of the switch S4. The other end of the resistor Rs is connected to the heater connector Cn on the positive electrode side connected to one end of the heater HTR. A voltage divider circuit Pb including two resistors is connected to a connection point between the switch S4 and the resistor Rs. A connection point between the two resistors that constitute the voltage divider circuit Pb is connected to a terminal P 18 of the MCU 1. The connection point between the switch S4 and the resistor Rs is further connected to a positive power supply terminal of the operational amplifier OP1.

A source terminal of the switch S3 implemented by a P-channel MOSFET is connected to a connection line between the output terminal VOUT of the step-up DC/DC converter 9 and the source terminal of the switch S4. A gate terminal of the switch S3 is connected to a terminal P16 of the MCU 1. A drain terminal of the switch S3 is connected to a connection line between the resistor Rs and the heater connector Cn on the positive electrode side. In this way, a circuit including the switch S3 and a circuit including the switch S4 and the resistor Rs are connected in parallel between the output terminal VOUT of the step-up DC/DC converter 9 and the positive electrode side of the heater connector Cn. Since the circuit including the switch S3 does not include a resistor, the circuit including the switch S3 has a lower resistance than that of the circuit including the switch S4 and the resistor Rs.

A non-inverting input terminal of the operational amplifier OP 1 is connected to the connection line between the resistor Rs and the heater connector Cn on the positive electrode side. An inverting input terminal of the operational amplifier OP 1 is connected to the heater connector Cn on the negative electrode side connected to the other end of the heater HTR and a drain terminal of the switch S6 implemented by an N-channel MOSFET. A source terminal of the switch S6 is connected to the ground line. A gate terminal of the switch S6 is connected to a terminal P14 of the MCU 1, an anode of a diode D4, and the enable terminal EN of the step-up DC/DC converter 9. A cathode of the diode D4 is connected to a Q terminal of the FF 17. One end of a resistor R4 is connected to an output terminal of the operational amplifier OP1. The other end of the resistor R4 is connected to a terminal P9 of the MCU 1 and a drain terminal of the switch S5 implemented by an N-channel MOSFET. A source terminal of the switch S5 is connected to the ground line. A gate terminal of the switch S5 is connected to the connection line between the resistor Rs and the heater connector Cn on the positive electrode side.

The input terminal VBUS of the charging IC 2 is connected to anodes of the LEDs L1 to L8. Cathodes of the LEDs L1 to L8 are connected to control terminals PD1 to PD8 of the MCU 1 via resistors for current limitation. That is, the LEDs L1 to L8 are connected in parallel to the input terminal VBUS. The LEDs L1 to L8 are configured to operate by the USB voltage V_{USB} supplied from the USB cable connected to the receptacle RCP and a voltage supplied from the power supply BAT via the charging IC 2. Transistors (switching elements) connected to the control terminals PD1 to PD8 and the ground terminal GND are built in the MCU 1. The MCU 1 turns on the transistor connected to the control terminal PD1 to energize and turn on the LED L1, and turns off the transistor connected to the control terminal PD1 to turn off the LED L1. Since on and off of the transistor connected to the control terminal PD 1 are switched at a high speed, luminance and a light emission pattern of the LED L1 may be dynamically controlled. The LEDs L2 to L8 are also similarly controlled to be turned on by the MCU 1.

The charging IC 2 has a charging function of charging the power supply BAT based on the USB voltage V_{USB} input to the input terminal VBUS. The charging IC 2 acquires a charging current or a charging voltage of the power supply BAT from a terminal or a wire (not shown), and performs a charging control on the power supply BAT (a control on power supply from the charging terminal bat to the power supply BAT) based on the acquired charging current or the charging voltage. The charging IC 2 may acquire temperature information of the power supply BAT transmitted from the remaining amount meter IC 12 to the MCU 1 from the MCU 1 by the serial communication that uses the communication line LN, and may use the temperature information for the charging control.

The charging IC 2 further has a V_{BAT} power path function and an OTG function. The V_{BAT} power path function is a function of outputting, from an output terminal SYS, a system power supply voltage Vcc0 substantially the same as the power supply voltage V_{BAT} input to the charging terminal bat. The OTG function is a function of outputting, from the input terminal VBUS, a system power supply voltage Vcc4 obtained by stepping up the power supply voltage V_{BAT} input to the charging terminal bat. On and off of the OTG function of the charging IC 2 is controlled by the MCU 1 by the serial communication that uses the communication line LN. In the OTG function, the power supply voltage V_{BAT} input to the charging terminal bat may be output from the input terminal VBUS as it is. In this case, the power supply voltage V_{BAT} and the system power supply voltage Vcc4 are substantially the same.

The output terminal SYS of the charging IC 2 is connected to an input terminal VIN of the step-up and step-down DC/DC converter 8. One end of a reactor La is connected to a switching terminal SW of the charging IC 2. The other end of the reactor La is connected to the output terminal SYS of the charging IC 2. A charging enable terminal CE ( ) of the charging IC 2 is connected to a terminal P22 of the MCU 1 via a resistor. Further, a collector terminal of a bipolar transistor S1 is connected to the charging enable terminal CE ( ) of the charging IC 2. An emitter terminal of the bipolar transistor S1 is connected to an output terminal VOUT of the LSW 4 described later. A base terminal of the bipolar transistor S1 is connected to the Q terminal of the FF 17. Further, one end of a resistor Rc is connected to the charging enable terminal CE ( ) of the charging IC 2. The other end of the resistor Rc is connected to the output terminal VOUT of the LSW 4.

A resistor is connected to the input terminal VIN and an enable terminal EN of the step-up and step-down DC/DC converter 8. When the system power supply voltage Vcc0 is input from the output terminal SYS of the charging IC 2 to the input terminal VIN of the step-up and step-down DC/DC converter 8, a signal input to the enable terminal EN of the step-up and step-down DC/DC converter 8 is at a high level, and the step-up and step-down DC/DC converter 8 starts a step-up operation or a step-down operation. The step-up and step-down DC/DC converter 8 generates a system power supply voltage Vcc1 by stepping up or stepping down the system power supply voltage Vcc0 input to the input terminal VIN by a switching control on a built-in transistor connected to a reactor Lb, and outputs the generated system power supply voltage Vcc1 from an output terminal VOUT. The output terminal VOUT of the step-up and step-down DC/DC converter 8 is connected to a feedback terminal FB of the step-up and step-down DC/DC converter 8, an input terminal VIN of the LSW 4, an input terminal VIN of the switch driver 7, and a power supply terminal VCC and a D terminal of the FF 16. A wire to which the system power supply voltage Vcc1 output from the output terminal VOUT of the step-up and step-down DC/DC converter 8 is supplied is referred to as a power supply line PL 1.

When a signal input to a control terminal ON is at a high level, the LSW 4 outputs, from an output terminal VOUT, the system power supply voltage Vcc1 input to the input terminal VIN. The control terminal ON of the LSW 4 and the power supply line PL1 are connected via a resistor. Therefore, when the system power supply voltage Vcc1 is supplied to the power supply line PL 1, a high-level signal is input to the control terminal ON of the LSW 4. Although a voltage output from the LSW 4 is the same as the system power supply voltage Vcc1 when a wire resistance or the like is ignored, in order to distinguish from the system power supply voltage Vcc1, the voltage output from the output terminal VOUT of the LSW 4 is hereinafter referred to as a system power supply voltage Vcc2.

The output terminal VOUT of the LSW 4 is connected to a power supply terminal VDD of the MCU 1, an input terminal VIN of the LSW 5, a power supply terminal VDD of the remaining amount meter IC 12, a power supply terminal VCC of the ROM 6, the emitter terminal of the bipolar transistor S1, the resistor Rc, and a power supply terminal VCC of the FF 17. A wire to which the system power supply voltage Vcc2 output from the output terminal VOUT of the LSW 4 is supplied is referred to as a power supply line PL2.

When a signal input to a control terminal ON is at a high level, the LSW 5 outputs, from an output terminal VOUT, the system power supply voltage Vcc2 input to the input terminal VIN. The control terminal ON of the LSW 5 is connected to a terminal P23 of the MCU 1. Although a voltage output from the LSW 5 is the same as the system power supply voltage Vcc2 when a wire resistance or the like is ignored, in order to distinguish from the system power supply voltage Vcc2, the voltage output from the output terminal VOUT of the LSW 5 is hereinafter referred to as a system power supply voltage Vcc3. A wire to which the system power supply voltage Vcc3 output from the output terminal VOUT of the LSW 5 is supplied is referred to as a power supply line PL3.

A series circuit of the thermistor T2 and a resistor Rt2 is connected to the power supply line PL3, and the resistor Rt2 is connected to the ground line. The thermistor T2 and the resistor Rt2 constitute a voltage divider circuit, and a connection point between the thermistor T2 and the resistor Rt2 is connected to a terminal P21 of the MCU 1. The MCU 1 detects a temperature fluctuation (resistance value fluctuation) of the thermistor T2 based on a voltage input to the terminal P21, and determines presence or absence of the puff operation based on a temperature fluctuation amount thereof.

A series circuit of the thermistor T3 and a resistor Rt3 is connected to the power supply line PL3, and the resistor Rt3 is connected to the ground line. The thermistor T3 and the resistor Rt3 constitute a voltage divider circuit, and a connection point between the thermistor T3 and the resistor Rt3 is connected to a terminal P 13 of the MCU 1 and an inverting input terminal of the operational amplifier OP2. The MCU 1 detects a temperature of the thermistor T3 (corresponding to the temperature of the heater HTR) based on a voltage input to the terminal P13.

A series circuit of the thermistor T4 and a resistor Rt4 is connected to the power supply line PL3, and the resistor Rt4 is connected to the ground line. The thermistor T4 and the resistor Rt4 constitute a voltage divider circuit, and a connection point between the thermistor T4 and the resistor Rt4 is connected to a terminal P12 of the MCU 1 and an inverting input terminal of the operational amplifier OP3. The MCU 1 detects a temperature of the thermistor T4 (corresponding to a temperature of the case 110) based on a voltage input to the terminal P12.

A source terminal of a switch S7 implemented by a MOSFET is connected to the power supply line PL2. A gate terminal of the switch S7 is connected to a terminal P20 of the MCU 1. A drain terminal of the switch S7 is connected to one of a pair of connectors to which the vibration motor M is connected. The other of the pair of connectors is connected to the ground line. The MCU 1 controls opening and closing of the switch S7 by operating potential of the terminal P20, and may cause the vibration motor M to vibrate in a specific pattern. A dedicated driver IC may be used instead of the switch S7.

A positive power supply terminal of the operational amplifier OP2 and a voltage divider circuit Pd (a series circuit of two resistors) connected to a non-inverting input terminal of the operational amplifier OP2 are connected to the power supply line PL2. A connection point between the two resistors that constitute the voltage divider circuit Pd is connected to the non-inverting input terminal of the operational amplifier OP2. The operational amplifier OP2 outputs a signal corresponding to the temperature of the heater HTR (a signal corresponding to a resistance value of the thermistor T3). In the present embodiment, since a thermistor having the NTC characteristics is used as the thermistor T3, an output voltage of the operational amplifier OP2 decreases as the temperature of the heater HTR (the temperature of the thermistor T3) increases. This is because a negative power supply terminal of the operational amplifier OP2 is connected to the ground line, and when a voltage value input to the inverting input terminal of the operational amplifier OP2 (a value of a voltage divided by the thermistor T3 and the resistor Rt3) becomes higher than a voltage value input to the non-inverting input terminal of the operational amplifier OP2 (a value of a voltage divided by the voltage divider circuit Pd), a value of an output voltage of the operational amplifier OP2 becomes substantially equal to a value of ground potential. That is, when the temperature of the heater HTR (the temperature of the thermistor T3) becomes high, the output voltage of the operational amplifier OP2 is at a low level.

When the thermistor having the PTC characteristics is used as the thermistor T3, an output of the voltage divider circuit including the thermistor T3 and the resistor Rt3 may be connected to the non-inverting input terminal of the operational amplifier OP2, and an output of the voltage divider circuit Pd may be connected to the inverting input terminal of the operational amplifier OP2.

A positive power supply terminal of the operational amplifier OP3 and a voltage divider circuit Pe (a series circuit of two resistors) connected to a non-inverting input terminal of the operational amplifier OP3 are connected to the power supply line PL2. A connection point between the two resistors that constitute the voltage divider circuit Pe is connected to the non-inverting input terminal of the operational amplifier OP3. The operational amplifier OP3 outputs a signal corresponding to the temperature of the case 110 (a signal corresponding to a resistance value of the thermistor T4). In the present embodiment, since a thermistor having the NTC characteristics is used as the thermistor T4, an output voltage of the operational amplifier OP3 decreases as the temperature of the case 110 increases. This is because a negative power supply terminal of the operational amplifier OP3 is connected to the ground line, and when a voltage value input to the inverting input terminal of the operational amplifier OP3 (a value of a voltage divided by the thermistor T4 and the resistor Rt4) becomes higher than a voltage value input to the non-inverting input terminal of the operational amplifier OP3 (a value of a voltage divided by the voltage divider circuit Pe), a value of an output voltage of the operational amplifier OP3 becomes substantially equal to a value of the ground potential. That is, when a temperature of the thermistor T4 becomes high, an output voltage of the operational amplifier OP3 is at a low level.

When a thermistor having the PTC characteristics is used as the thermistor T4, an output of the voltage divider circuit including the thermistor T4 and the resistor Rt4 may be connected to the non-inverting input terminal of the operational amplifier OP3, and an output of the voltage divider circuit Pe may be connected to the inverting input terminal of the operational amplifier OP3.

A resistor R1 is connected to an output terminal of the operational amplifier OP2. A cathode of a diode D1 is connected to the resistor R1. An anode of the diode D1 is connected to an output terminal of the operational amplifier OP3, a D terminal of the FF 17, and the CLR ( ) terminal of the FF 17. A resistor R2 connected to the power supply line PL 1 is connected to a connection line between the resistor R1 and the diode D1. A CLR ( ) terminal of the FF 16 is connected to the connection line.

One end of a resistor R3 is connected to a connection line between the D terminal of the FF 17 and a connection point between the anode of the diode D1 and the output terminal of the operational amplifier OP3. The other end of the resistor R3 is connected to the power supply line PL2. An anode of the diode D2 connected to the notification terminal 12a of the remaining amount meter IC 12, an anode of a diode D3, and the CLR ( ) terminal of the FF 17 are connected to the connection line. A cathode of the diode D3 is connected to a terminal P5 of the MCU 1.

When the temperature of the heater HTR becomes excessive, a signal output from the operational amplifier OP2 becomes small, and a signal input to the CLR ( ) terminal is at a low level, the FF 16 inputs a high-level signal from a Q ( ) terminal to a terminal P11 of the MCU 1. The high-level system power supply voltage Vcc1 is supplied from the power supply line PL1 to the D terminal of the FF 16. Therefore, in the FF 16, a low-level signal continues to be output from the Q ( ) terminal unless a signal input to the CLR ( ) terminal that operates with a negative logic is at a low level.

A signal input to the CLR ( ) terminal of the FF 17 is at a low level in any one of a case where the temperature of the heater HTR is excessive, a case where the temperature of the case 110 is excessive, and a case where a low-level signal indicating abnormality detection is output from the notification terminal 12a of the remaining amount meter IC 12. When a signal input to the CLR ( ) terminal is at a low level, the FF 17 outputs a low-level signal from the Q terminal. The low-level signal is input to a terminal P10 of the MCU 1, the gate terminal of the switch S6, the enable terminal EN of the step-up DC/DC converter 9, and the base terminal of the bipolar transistor S1 connected to the charging IC 2. When a low-level signal is input to the gate terminal of the switch S6, since a gate-source voltage of an N-channel MOSFET that constitutes the switch S6 is less than a threshold voltage, the switch S6 is turned off. When a low-level signal is input to the enable terminal EN of the step-up DC/DC converter 9, since the enable terminal EN of the step-up DC/DC converter 9 has a positive logic, a step-up operation is stopped. When a low-level signal is input to the base terminal of the bipolar transistor S1, the bipolar transistor S1 is turned on (an amplified current is output from the collector terminal). When the bipolar transistor S1 is turned on, the high-level system power supply voltage Vcc2 is input to a CE ( ) terminal of the charging IC 2 via the bipolar transistor S1. Since the CE ( ) terminal of the charging IC 2 has a negative logic, charging of the power supply BAT is stopped. Accordingly, heating of the heater HTR and charging of the power supply BAT are stopped. Even when the MCU 1 tries to output a low-level enable signal from the terminal P22 to the charging enable terminal CE ( ) of the charging IC 2, when the bipolar transistor S1 is turned on, the amplified current is input from the collector terminal to the terminal P22 of the MCU 1 and the charging enable terminal CE ( ) of the charging IC 2. Accordingly, it should be noted that a high-level signal is input to the charging enable terminal CE ( ) of the charging IC 2.

The high-level system power supply voltage Vcc2 is supplied from the power supply line PL2 to the D terminal of the FF 17. Therefore, in the FF 17, unless a signal input to the CLR ( ) terminal that operates with the negative logic is at a low level, a high-level signal continues to be output from the Q terminal. When a low-level signal is output from the output terminal of the operational amplifier OP3, the low-level signal is input to the CLR ( ) terminal of the FF 17 regardless of a level of a signal output from the output terminal of the operational amplifier OP2. It should be noted that when a high-level signal is output from the output terminal of the operational amplifier OP2, the low-level signal output from the output terminal of the operational amplifier OP3 is not influenced by the high-level signal by the diode D1. When a low-level signal is output from the output terminal of the operational amplifier OP2, even when a high-level signal is output from the output terminal of the operational amplifier OP3, the high-level signal is replaced with a low-level signal via the diode D1.

The power supply line PL2 further branches from the MCU mounting board 161 toward an LED mounting board 163 and Hall IC mounting board 164 side. A power supply terminal VDD of the Hall IC 13, a power supply terminal VCC of the communication IC 15, and a power supply terminal VDD of the Hall IC 14 are connected to the power supply line PL2 that branches.

An output terminal OUT of the Hall IC 13 is connected to a terminal P3 of the MCU 1 and a terminal SW2 of the switch driver 7. When the outer panel 115 is removed, a low-level signal is output from the output terminal OUT of the Hall IC 13. The MCU 1 determines whether the outer panel 115 is attached based on a signal input to the terminal P3.

The LED mounting board 163 is provided with a series circuit (a series circuit of a resistor and a capacitor) connected to the operation switch OPS. The series circuit is connected to the power supply line PL2. A connection point between the resistor and the capacitor of the series circuit is connected to the terminal P4 of the MCU 1, the operation switch OPS, and a terminal SW1 of the switch driver 7. In a state where the operation switch OPS is not pressed, the operation switch OPS is not conducted, and signals input to the terminal P4 of the MCU 1 and the terminal SW1 of the switch driver 7 are at a high level by the system power supply voltage Vcc2. When the operation switch OPS is pressed and the operation switch OPS is in a conductive state, the signals input to the terminal P4 of the MCU 1 and the terminal SW1 of the switch driver 7 are connected to the ground line and therefore are at a low level. The MCU 1 detects an operation of the operation switch OPS based on a signal input to the terminal P4.

The switch driver 7 is provided with a reset input terminal RSTB. The reset input terminal RSTB is connected to the control terminal ON of the LSW 4. When levels of signals input to the terminal SW1 and the terminal SW2 are both low (in a state where the outer panel 115 is removed and the operation switch OPS is pressed), the switch driver 7 stops an output operation of the LSW 4 by outputting a low-level signal from the reset input terminal RSTB. That is, when the operation switch OPS, which is originally pressed down via the pressing portion 117 of the outer panel 115, is directly pressed down by the user in a state where the outer panel 115 is removed, the levels of the signals input to the terminal SW1 and the terminal SW2 of the switch driver 7 are both low.

### <Operation of Each Operation Mode of Inhaler>

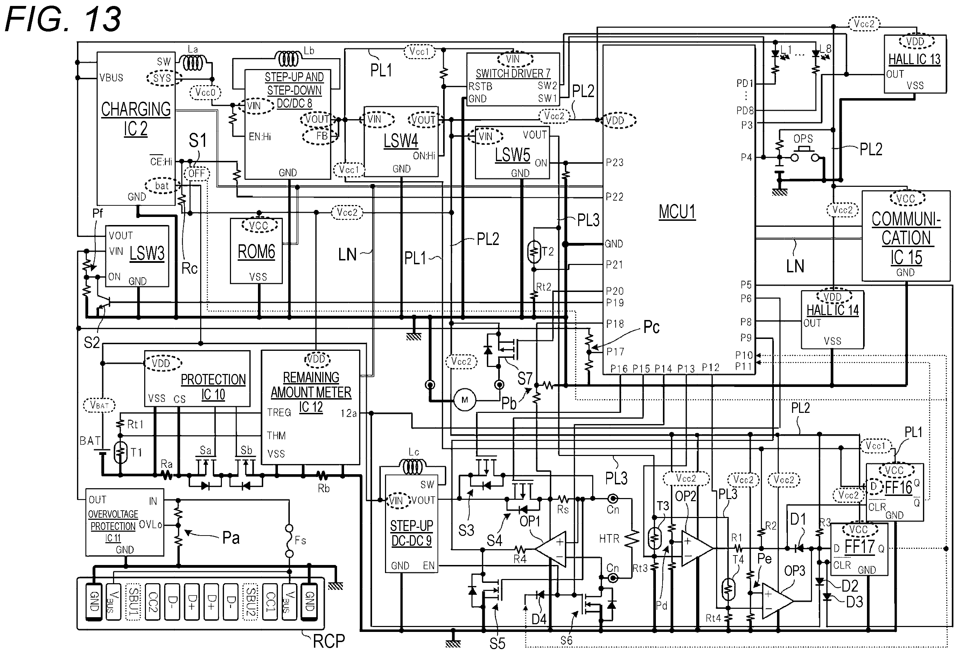

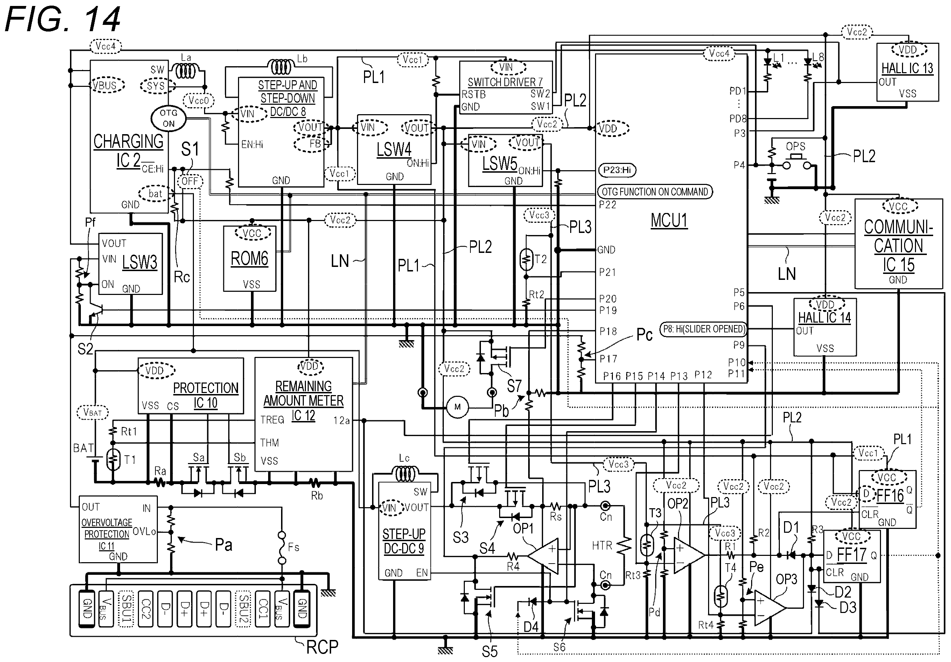

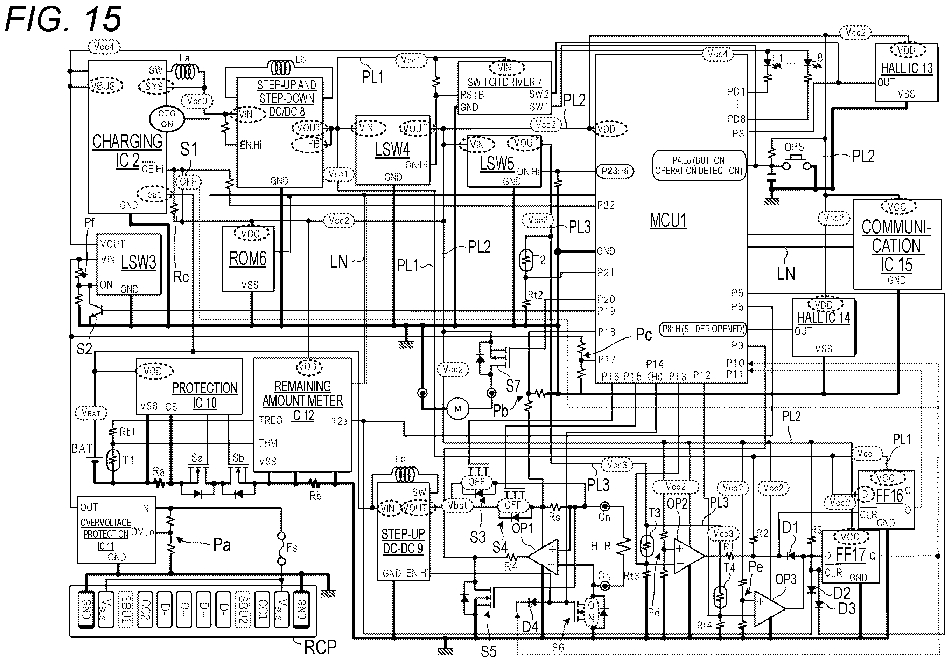

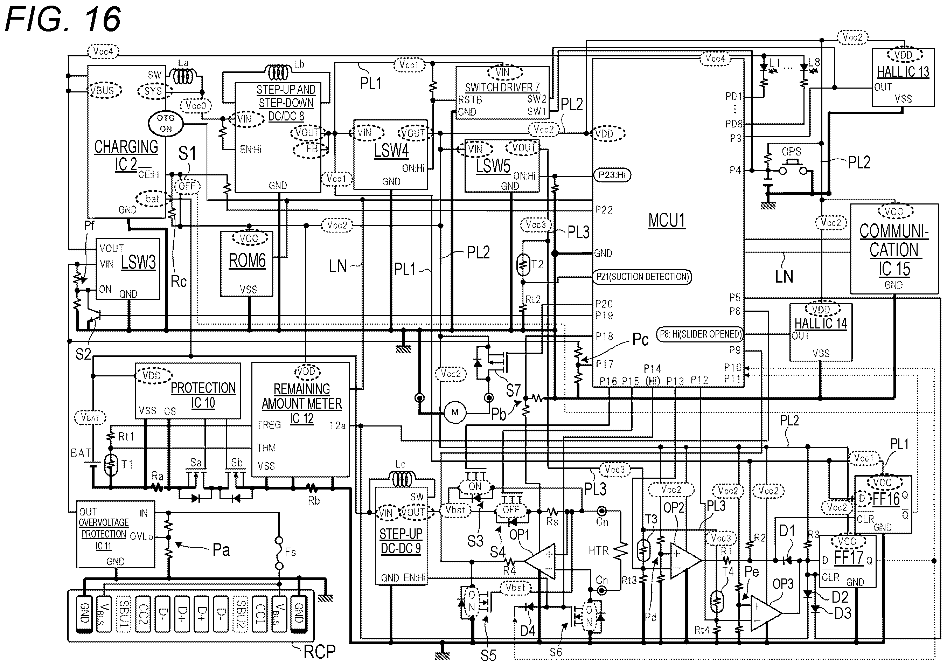

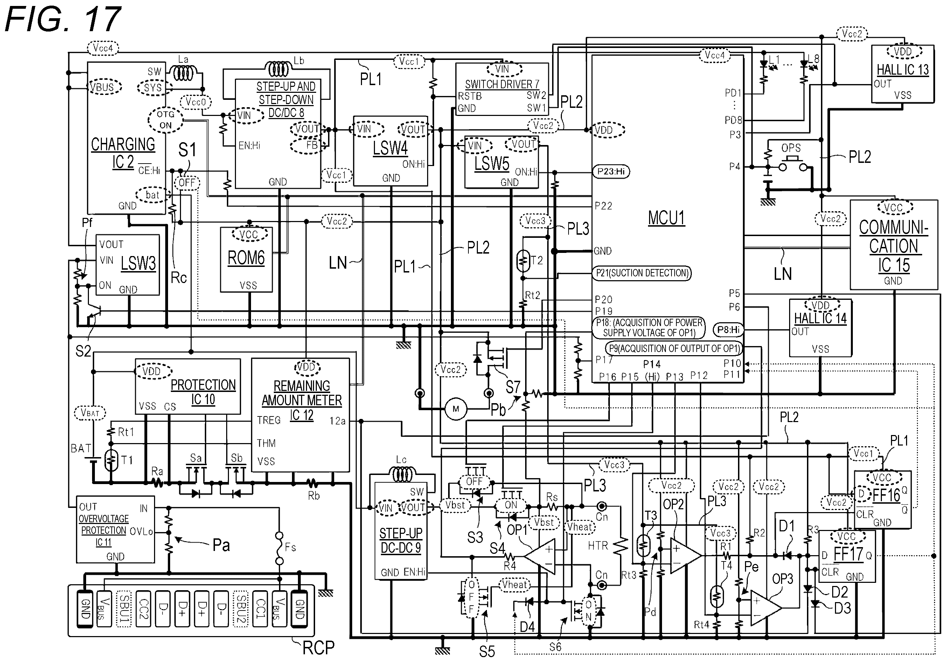

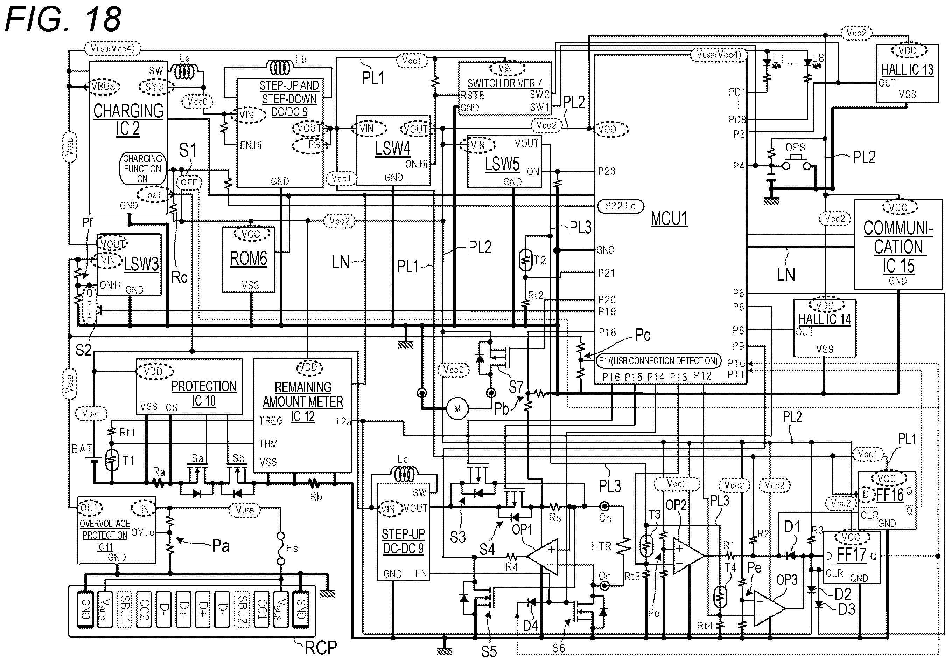

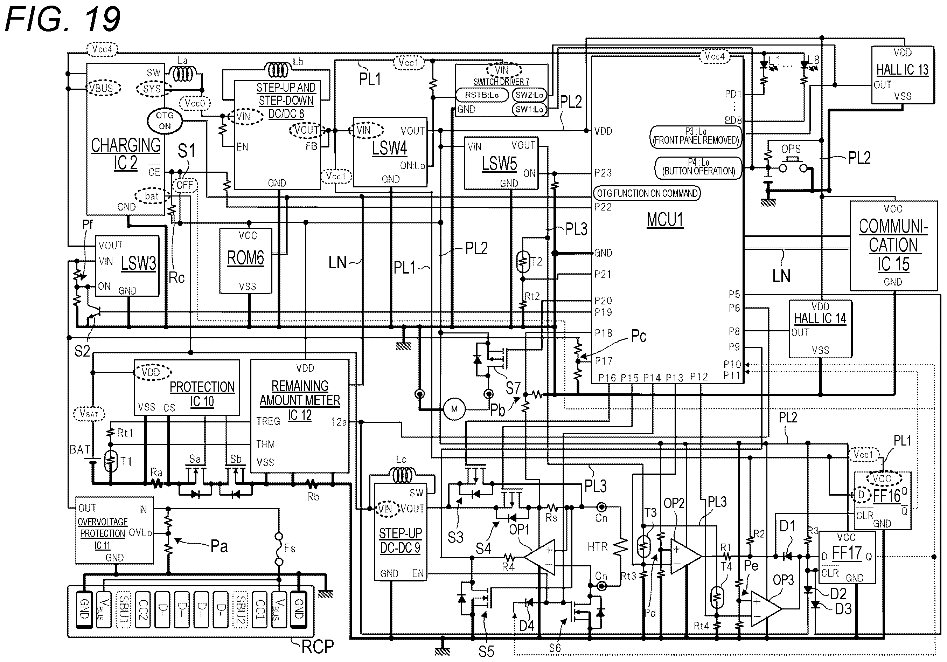

Hereinafter, an operation of the electric circuit shown in Fig. 10 will be described with reference to Figs. 13 to 19. Fig. 13 is a diagram for illustrating an operation of the electric circuit in the sleep mode. Fig. 14 is a diagram for illustrating an operation of the electric circuit in the active mode. Fig. 15 is a diagram for illustrating an operation of the electric circuit in the heating initial setting mode. Fig. 16 is a diagram for illustrating an operation of the electric circuit when the heater HTR is heated in the heating mode. Fig. 17 is a diagram for illustrating an operation of the electric circuit when the temperature of the heater HTR is detected in the heating mode. Fig. 18 is a diagram for illustrating an operation of the electric circuit in the charging mode. Fig. 19 is a diagram for illustrating an operation of the electric circuit when the MCU 1 is reset (restarted). In each of Figs. 13 to 19, among terminals of the electronic component formed into a chip, a terminal surrounded by a dashed ellipse indicates a terminal to which the power supply voltage V_{BAT}, the USB voltage V_{USB}, the system power supply voltage, or the like is input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: Fig. 13>

The MCU 1 enables the V_{BAT} power path function of the charging IC 2, and disables the OTG function and the charging function of the charging IC 2. As the USB voltage V_{USB} is not input to the input terminal VBUS of the charging IC 2, the VBAT power path function of the charging IC 2 is enabled. Since a signal for enabling the OTG function is not output from the MCU 1 to the charging IC 2 through the communication line LN, the OTG function is disabled. Therefore, the charging IC 2 generates the system power supply voltage Vcc0 from the power supply voltage V_{BAT} input to the charging terminal bat, and outputs the generated system power supply voltage Vcc0 from the output terminal SYS. The system power supply voltage Vcc0 output from the output terminal SYS is input to the input terminal VIN and the enable terminal EN of the step-up and step-down DC/DC converter 8. The step-up and step-down DC/DC converter 8 is enabled when the high-level system power supply voltage Vcc0 is input to the enable terminal EN having the positive logic, generates the system power supply voltage Vcc1 from the system power supply voltage Vcc0, and outputs the generated system power supply voltage Vcc1 from the output terminal VOUT. The system power supply voltage Vcc1 output from the output terminal VOUT of the step-up and step-down DC/DC converter 8 is supplied to the input terminal VIN of the LSW 4, the control terminal ON of the LSW 4, the input terminal VIN of the switch driver 7, and the power supply terminal VCC and the D terminal of the FF 16.

When the voltage based on the system power supply voltage Vcc1 is input to the control terminal ON, the LSW 4 outputs the system power supply voltage Vcc1 input to the input terminal VIN as the system power supply voltage Vcc2 from the output terminal VOUT. The system power supply voltage Vcc2 output from the LSW 4 is input to the power supply terminal VDD of the MCU 1, the input terminal VIN of the LSW 5, the power supply terminal VDD of the Hall IC 13, the power supply terminal VCC of the communication IC 15, and the power supply terminal VDD of the Hall IC 14. Further, the system power supply voltage Vcc2 is supplied to the power supply terminal VDD of the remaining amount meter IC 12, the power supply terminal VCC of the ROM 6, the resistor Rc and the bipolar transistor S1 connected to the charging enable terminal CE ( ) of the charging IC 2, the power supply terminal VCC of the FF 17, the positive power supply terminal of the operational amplifier OP3, the voltage divider circuit Pe, the positive power supply terminal of the operational amplifier OP2, and the voltage divider circuit Pd. The bipolar transistor S1 connected to the charging IC 2 is turned off unless a low-level signal is output from the Q terminal of the FF 17. Therefore, the system power supply voltage Vcc2 generated by the LSW 4 is also input to the charging enable terminal CE ( ) of the charging IC 2. Since the charging enable terminal CE ( ) of the charging IC 2 has the negative logic, the charging function of the charging IC 2 is turned off in the state.

In this way, in the sleep mode, since the LSW 5 stops outputting the system power supply voltage Vcc3, power supply to an electronic component connected to the power supply line PL3 is stopped. In the sleep mode, since the OTG function of the charging IC 2 is stopped, power supply to the LEDs L 1 to L8 is stopped.

### <Active Mode: Fig. 14>

When detecting that a signal input to the terminal P8 is at a high level and the slider 119 is opened from the sleep mode state of Fig. 13, the MCU 1 inputs the high-level signal from the terminal P23 to the control terminal ON of the LSW 5. Accordingly, the LSW 5 outputs the system power supply voltage Vcc2 input to the input terminal VIN from the output terminal VOUT as the system power supply voltage Vcc3. The system power supply voltage Vcc3 output from the output terminal VOUT of the LSW 5 is supplied to the thermistor T2, the thermistor T3, and the thermistor T4.

Further, when detecting that the slider 119 is opened, the MCU 1 enables the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: Fig. 15>

When a signal input to the terminal P4 is at a low level (the operation switch OPS is pressed) from the state of Fig. 14, the MCU 1 performs various settings necessary for heating, and then inputs a high-level enable signal from the terminal P14 to the enable terminal EN of the step-up DC/DC converter 9. Accordingly, the step-up DC/DC converter 9 outputs a drive voltage V_{bst} obtained by stepping up the power supply voltage V_{BAT} from the output terminal VOUT. The drive voltage V_{bst} is supplied to the switch S3 and the switch S4. In the state, the switch S3 and the switch S4 are turned off. The switch S6 is turned on by the high-level enable signal output from the terminal P14. Accordingly, a negative electrode side terminal of the heater HTR is connected to the ground line, and when the switch S3 is turned on, the heater HTR is in a heatable state. After the enable signal of the high-level signal is output from the terminal P14 of the MCU 1, the processing is shifted to the heating mode.

### <Heating of Heater during Heating Mode: Fig. 16>

In the state of Fig. 15, the MCU 1 starts a switching control of the switch S3 connected to the terminal P16 and a switching control of the switch S4 connected to the terminal P15. These switching controls may be automatically started when the heating initial setting mode described above is completed, or may be started by further pressing the operation switch OPS. Specifically, as shown in Fig. 16, the MCU 1 performs a heating control of turning on the switch S3, turning off the switch S4, supplying the drive voltage V_{bst} to the heater HTR, and heating the heater HTR for aerosol generation, and as shown in Fig. 17, the MCU 1 performs a temperature detection control of turning off the switch S3, turning on the switch S4, and detecting the temperature of the heater HTR.

As shown in Fig. 16, during the heating control, the drive voltage V_{bst} is also supplied to a gate of the switch S5, and the switch S5 is turned on. During the heating control, the drive voltage V_{bst} that passes through the switch S3 is also input to the positive power supply terminal of the operational amplifier OP1 via the resistor Rs. A resistance value of the resistor Rs is negligibly smaller than an internal resistance value of the operational amplifier OP1. Therefore, during the heating control, a voltage input to the positive power supply terminal of the operational amplifier OP 1 is substantially equal to the drive voltage V_{bst}.

A resistance value of the resistor R4 is greater than an on-resistance value of the switch S5. The operational amplifier OP 1 operates also during the heating control, but the switch S5 is turned on during the heating control. In a state where the switch S5 is turned on, an output voltage of the operational amplifier OP1 is divided by a voltage divider circuit of the resistor R4 and the switch S5, and is input to the terminal P9 of the MCU 1. Since the resistance value of the resistor R4 is greater than the on-resistance value of the switch S5, a voltage input to the terminal P9 of the MCU 1 is sufficiently small. Accordingly, a large voltage may be prevented from being input from the operational amplifier OP 1 to the MCU 1.

### <Heater Temperature Detection during Heating Mode: Fig. 17>

As shown in Fig. 17, during the temperature detection control, the drive voltage V_{bst} is input to the positive power supply terminal of the operational amplifier OP1 and is also input to the voltage divider circuit Pb. A voltage divided by the voltage divider circuit Pb is input to the terminal P18 of the MCU 1. The MCU 1 acquires a reference voltage Vₜₑₘₚ applied to a series circuit of the resistor Rs and the heater HTR during the temperature detection control based on the voltage input to the terminal P18.

During the temperature detection control, the drive voltage V_{bst} (the reference voltage Vₜₑₘₚ) is supplied to the series circuit of the resistor Rs and the heater HTR. Then, a voltage Vₕₑₐₜ obtained by dividing the drive voltage V_{bst} (the reference voltage Vₜₑₘₚ) by the resistor Rs and the heater HTR is input to the non-inverting input terminal of the operational amplifier OP1. Since the resistance value of the resistor Rs is sufficiently greater than the resistance value of the heater HTR, the voltage Vₕₑₐₜ is a value sufficiently lower than the drive voltage V_{bst}. During the temperature detection control, the low voltage Vₕₑₐₜ is also supplied to the gate terminal of the switch S5, so that the switch S5 is turned off. The operational amplifier OP 1 amplifies and outputs a difference between a voltage input to the inverting input terminal and the voltage Vₕₑₐₜ input to the non-inverting input terminal.

An output signal of the operational amplifier OP1 is input to the terminal P9 of the MCU 1. The MCU 1 acquires the temperature of the heater HTR based on the signal input to the terminal P9, the reference voltage Vₜₑₘₚ acquired based on the input voltage of the terminal P18, and a known electrical resistance value of the resistor Rs. The MCU 1 performs a heating control (for example, a control such that the temperature of the heater HTR becomes a target temperature) on the heater HTR based on the acquired temperature of the heater HTR.

The MCU 1 may acquire the temperature of the heater HTR even in a period during which the switch S3 and the switch S4 are turned off (a period during which the heater HTR is not energized). Specifically, the MCU 1 acquires the temperature of the heater HTR based on a voltage input to the terminal P13 (an output voltage of a voltage divider circuit including the thermistor T3 and the resistor Rt3).

The MCU 1 may also acquire the temperature of the case 110 at an optional timing. Specifically, the MCU 1 acquires the temperature of the case 110 based on a voltage input to the terminal P12 (an output voltage of a voltage divider circuit including the thermistor T4 and the resistor Rt4).

### <Charging Mode: Fig. 18>

Fig. 18 illustrates a case where the USB connection is established in a state of the sleep mode. When the USB connection is established, the USB voltage V_{USB} is input to the input terminal VIN of the LSW 3 via the overvoltage protection IC 11. The USB voltage V_{USB} is also supplied to the voltage divider circuit Pf connected to the input terminal VIN of the LSW 3. Since the bipolar transistor S2 is turned on at a time point immediately after the USB connection is established, a signal input to the control terminal ON of the LSW 3 remains at a low level. The USB voltage V_{USB} is also supplied to the voltage divider circuit Pc connected to the terminal P17 of the MCU 1, and a voltage divided by the voltage divider circuit Pc is input to the terminal P17. The MCU 1 detects that the USB connection is established based on the voltage input to the terminal P17.

When detecting that the USB connection is established, the MCU 1 turns off the bipolar transistor S2 connected to the terminal P19. When a low-level signal is input to a gate terminal of the bipolar transistor S2, the USB voltage V_{USB} divided by the voltage divider circuit Pf is input to the control terminal ON of the LSW 3. Accordingly, a high-level signal is input to the control terminal ON of the LSW 3, the LSW 3 outputs the USB voltage V_{USB} from the output terminal VOUT. The USB voltage V_{USB} output from the LSW 3 is input to the input terminal VBUS of the charging IC 2. The USB voltage V_{USB} output from the LSW 3 is supplied to the LEDs L1 to L8 as the system power supply voltage Vcc4 as it is.

When detecting that the USB connection is established, the MCU 1 further outputs a low-level enable signal from the terminal P22 to the charging enable terminal CE ( ) of the charging IC 2. Accordingly, the charging IC 2 enables the charging function of the power supply BAT, and starts charging the power supply BAT by the USB voltage V_{USB} input to the input terminal VBUS.

In a case where the USB connection is established in a state of the active mode, when detecting that the USB connection is established, the MCU 1 turns off the bipolar transistor S2 connected to the terminal P19, outputs a low-level enable signal from the terminal P22 to the charging enable terminal CE ( ) of the charging IC 2, and turns off the OTG function of the charging IC 2 by the serial communication that uses the communication line LN. Accordingly, the system power supply voltage Vcc4 supplied to the LEDs L1 to L8 is switched from a voltage (a voltage based on the power supply voltage V_{BAT}) generated by the OTG function of the charging IC 2 to the USB voltage V_{USB} output from the LSW 3. The LEDs L1 to L8 do not operate unless the built-in transistor is controlled to be turned on by the MCU 1. Therefore, an unstable voltage in a transition period from turning on to turning off the OTG function is prevented from being supplied to the LEDs L1 to L8.

### <Reset of MCU: Fig. 19>

When the outer panel 115 is removed, an output of the Hall IC 13 is at a low level, the operation switch OPS is operated to be turned on, and a signal input to the terminal P4 of the MCU 1 is at a low level, both the terminal SW1 and the terminal SW2 of the switch driver 7 are at a low level. Accordingly, the switch driver 7 outputs a low-level signal from the reset input terminal RSTB. The low-level signal output from the reset input terminal RSTB is input to the control terminal ON of the LSW 4. Accordingly, the LSW 4 stops outputting the system power supply voltage Vcc2 from the output terminal VOUT. When the output of the system power supply voltage Vcc2 is stopped, since the system power supply voltage Vcc2 is not input to the power supply terminal VDD of the MCU 1, the MCU 1 is stopped.

When a time during which the low-level signal is output from the reset input terminal RSTB reaches a predetermined time or when a signal input to any one of the terminal SW1 and the terminal SW2 is at a high level, the switch driver 7 returns the signal output from the reset input terminal RSTB to a high level. Accordingly, the control terminal ON of the LSW 4 is at a high level, and a state where the system power supply voltage Vcc2 is supplied to each portion is restored.

### <Consumed Power of Electric Circuit>

In the inhalation system including the inhaler 100, it is the heater HTR that consumes the most power among all loads included in the system . For example, consumed power P_{HTR} by the heater HTR is greater than consumed power P_{LED} by each of the LEDs L1 to L8. The consumed power by the heater HTR is greater than total consumed power by all electronic components connected to the output terminal SYS of the charging IC 2. Therefore, it is preferable that a current value that the step-up DC/DC converter 9 connected to the heater HTR may receive supply from the power supply BAT is greater than a maximum current value that may be output by the output terminal SYS of the charging IC 2.

### <Preferred Form of Step-Up and Step-Down DC/DC Converter 8>

From a viewpoint of reducing a cost and size of the step-up and step-down DC/DC converter 8, at least one of a maximum input current and a maximum output current of the step-up and step-down DC/DC converter 8 is preferably smaller than the maximum current that may be output by the output terminal SYS of the charging IC 2. With such a configuration, when the output terminal SYS of the charging IC 2 outputs the maximum current, there is a possibility that an excessive current will be input to the step-up and step-down DC/DC converter 8. However, since the heater HTR that consumes the most power is not connected to the output terminal VOUT of the step-up and step-down DC/DC converter 8, the excessive current is not input to the step-up and step-down DC/DC converter 8. Therefore, even with such a configuration, the step-up and step-down DC/DC converter 8 does not cause any problems, and the cost and size may be reduced.

### <Preferred Form of Step-Up DC/DC Converter 9>

The step-up DC/DC converter 9 is preferably a switching regulator. As a specific example, in the present embodiment, the step-up DC/DC converter 9 steps up the voltage by operating in any one of a pulse frequency modulation (PFM) mode for performing a PFM control or a pulse width modulation (PWM) mode for performing a PWM control. More specifically, the step-up DC/DC converter 9 is equipped with a mode terminal MODE (not shown) for mode switching, and is configured to switch the operation mode according to potential of the mode terminal MODE. A maximum current that can be input to the switching terminal SW of the step-up DC/DC converter 9 when the step-up DC/DC converter 9 operates in the PFM mode is preferably greater than a maximum current that may be input to the switching terminal SW of step-up DC/DC converter 9 when the step-up DC/DC converter 9 operates in the PWM mode.

A voltage applied to the heater HTR differs greatly between the heating control and the temperature detection control. That is, a load of the step-up DC/DC converter 9 fluctuates between a heavy load and a light load. In the PWM mode, since a switching frequency is constant regardless of the load, a switching loss becomes dominant when the load is light, and efficiency decreases. On the other hand, since the PFM mode does not require much additional power when the load is light, the switching frequency is lowered and the switching loss is reduced. Therefore, high efficiency may be maintained even at a light load. As a degree of the load increases from light to heavy, the relationship reverses, and the efficiency in the PWM mode is higher than that in the PFM mode. The degree of the load in which the efficiency in the PWM mode is higher is in a limited range. Therefore, when the load of the step-up DC/DC converter 9 fluctuates between the heavy load and the light load, the step-up DC/DC converter 9 preferably operates in the PFM mode.

When operating in any one of the PWM mode and the PFM mode, the efficiency of the step-up DC/DC converter 9 tends to decrease near the maximum current that may be input to the step-up DC/DC converter 9 or the maximum current that may be output by the step-up DC/DC converter 9. In particular, when operating in the PFM mode, since there are the characteristics in the PFM mode that the efficiency decreases at the heavy load as described above, the efficiency of the DC/DC converter decreases near the maximum current due to two factors. Therefore, as described above, the step-up DC/DC converter 9 is used in which the maximum current that may be input to the switching terminal SW of the step-up DC/DC converter 9 when operating in the PFM mode is greater than the maximum current that may be input to the switching terminal SW of the step-up DC/DC converter 9 when operating in the PWM mode. Accordingly, even if the step-up DC/DC converter 9 operates in the PFM mode, it is possible to prevent the decrease in the efficiency under the heavy load.

From the viewpoint of the efficiency described above, it is preferable that the potential of the mode terminal MODE is maintained at potential at which the PFM mode is selected. Specifically, for example, the operation mode of the step-up DC/DC converter 9 is fixed to the PFM mode by setting the mode terminal MODE to a state where the mode terminal MODE is not connected to anywhere. Accordingly, a larger current may be input to the switching terminal SW of the step-up DC/DC converter 9, and a larger current may be supplied to the heater HTR. It should be noted that such a configuration in which the potential of the mode terminal MODE is made indefinite is merely a specific example. Depending on specifications of the step-up DC/DC converter 9, the PFM mode may be selected by setting the potential of the mode terminal MODE to a high level or a low level. In such a case, the potential of mode terminal MODE may be maintained at appropriate potential such that the PFM mode is selected.

### <Effect of Inhaler>

As described above, the inhaler 100 includes the power supply BAT, the heater connector Cn to which the heater HTR configured to heat the aerosol source (the rod 500) by consuming power supplied from the power supply BAT is connected, the MCU 1 which is configured to control a supply of the power from the power supply BAT to the heater HTR, and the thermistors T2 to T4 which are configured to operate by the system power supply voltage Vcc3 and are electronic components separate from the MCU 1, and is configured to operate in sleep mode. When the inhaler 100 operates in the sleep mode, the system power supply voltage Vcc3 is not supplied to the thermistors T2 to T4. Accordingly, the power consumed by the thermistors T2 to T4 during the sleep mode can be reduced (for example, substantially 0 (zero)), and the power consumed in the inhaler 100 during the sleep mode may be reduced. Therefore, it is possible to improve durability of the power supply BAT provided in the inhaler 100, and it is possible to improve convenience of the user, and thus, satisfaction of the user with respect to the inhaler 100 (the inhalation system) may be improved. The MCU 1 is an example of a controller, the thermistors T2 to T4 are examples of a first electronic component, and the system power supply voltage Vcc3 is an example of a first accessory voltage.

The inhaler 100 includes the LSW 5 that supplies the system power supply voltage Vcc3 to the thermistors T2 to T4 only when the LSW 5 is turned on. The MCU 1 is configured to control the LSW 5 via the terminal P23, and turns off the LSW 5 when the inhaler 100 operates in the sleep mode. More specifically, as described above, when a high-level signal is input to the control terminal ON of the LSW 5 from the terminal P23 of the MCU 1, the LSW 5 is turned on to output the system power supply voltage Vcc3 from the output terminal VOUT of the LSW 5. When a high-level signal is not input to the control terminal ON of the LSW 5 (for example, a low-level signal is input), the LSW 5 is in an OFF state where the system power supply voltage Vcc3 is not output from the output terminal VOUT of the LSW 5. When the inhaler 100 operates in the sleep mode, the MCU 1 controls the LSW 5 to be turned off by not inputting a high-level signal to the control terminal ON of the LSW 5 from the terminal P23 of the MCU 1. In other words, a low-level signal is input to the control terminal ON of the LSW 5 from the terminal P23 of the MCU 1. Accordingly, the supply of the system power supply voltage Vcc3 to the thermistors T2 to T4 via the LSW 5 may be prevented during the sleep mode. Therefore, power consumed by the thermistors T2 to T4 during the sleep mode may be reduced, and the power consumed in the inhaler 100 in the sleep mode may be reduced. The LSW 5 is an example of an accessory switch.

In the inhaler 100, the electronic components to which the system power supply voltage Vcc3 is not supplied in the sleep mode do not include an active element. Here, the active element is an element that performs an active operation (for example, amplification or rectification), such as a relay or a transistor. Such an active element tends to generate noise during a transition period from turning on (a state where an operating voltage is applied) to turning off (a state where the operating voltage is not applied) or a transition period from turning off to turning on.

Therefore, by not including an active element in the electronic components to which the system power supply voltage Vcc3 is not supplied in the sleep mode, it is possible to avoid that the active element is turned on or off (switching from on to off or switching from off to on is performed. The same applies below) when the inhaler 100 shifts to the sleep mode or returns from the sleep mode. Accordingly, noise generated due to on and off of the active element may be prevented, and it is possible to prevent the operation of the inhaler 100 from becoming unstable due to the noise. Therefore, it is possible to reduce the power consumed by the inhaler 100 during the sleep mode, and to stabilize the operation of the inhaler 100 when shifting to the sleep mode or returning from the sleep mode.

In the inhaler 100, the thermistors T2 to T4 are used as the electronic components to which the system power supply voltage Vcc3 is not supplied during the sleep mode. That is, passive elements such as the thermistors T2 to T4 that do not perform an active operation are less likely to generate noise when being turned on and off than the active element. Therefore, by using the thermistors T2 to T4 as the electronic components to which the system power supply voltage Vcc3 is not supplied during the sleep mode, it is possible to reduce the power consumed by the inhaler 100 during the sleep mode, and to stabilize the operation of the inhaler 100 when shifting to the sleep mode or returning from the sleep mode. The electronic components to which the system power supply voltage Vcc3 is not supplied during the sleep mode are not limited to thermistors such as the thermistors T2 to T4, and may include other electronic components as long as the electronic components are passive elements (for example, the resistors Rt2 to Rt4).

The inhaler 100 includes the operational amplifier OP2. As described above, the operational amplifier OP2 includes the non-inverting input terminal, the inverting input terminal, and the positive power supply terminal, and one (the inverting input terminal in the present embodiment) of the non-inverting input terminal and the inverting input terminal is connected to the thermistor T3. Power is supplied to the positive power supply terminal of the operational amplifier OP2 even when the inhaler 100 operates in the sleep mode (that is, when the system power supply voltage Vcc3 is not supplied to the thermistors T2 to T4). If the power is not supplied to the operational amplifier OP2 during the sleep mode, the power supply to the operational amplifier OP2 is started along with returning from the sleep mode to another operation mode (for example, the active mode), and the operational amplifier OP2 is turned on from the off state. In such a transition state from off to on, the output of the operational amplifier OP2 may become unstable regardless of the input to the input terminal.

Therefore, by supplying the power to the operational amplifier OP2 (the power supply to the positive power supply terminal of the operational amplifier OP2) even during the sleep mode, the transition state of the operational amplifier OP2 may be eliminated before a voltage corresponding to a value (for example, the resistance value) of the thermistor T3 is applied to the input terminal of the operational amplifier OP2 along with returning from the sleep mode to another operation mode (for example, the active mode). Accordingly, it is possible to stabilize the output of the operational amplifier OP2 when the voltage corresponding to the value of the thermistor T3 is applied to the input terminal of the operational amplifier OP2, and to improve accuracy of a control executed by the inhaler 100 based on the output of the operational amplifier OP2.

Power is also supplied to the operational amplifier OP3 having one (the inverting input terminal in the present embodiment) of the non-inverting input terminal and the inverting input terminal connected to the thermistor T4 during the sleep mode (power supplied to the positive power supply terminal of the operational amplifier OP3). Accordingly, the transition state of the operational amplifier OP3 can be eliminated before a voltage corresponding to a value (for example, the resistance value) of the thermistor T4 is applied to the input terminal of the operational amplifier OP3 along with returning from the sleep mode to another operation mode (for example, the active mode). Therefore, it is possible to stabilize the output of the operational amplifier OP3 when the voltage corresponding to the value of the thermistor T4 is applied to the input terminal of the operational amplifier OP3, and to improve the accuracy of the control executed by the inhaler 100 based on the output of the operational amplifier OP3.

In the inhaler 100, the MCU 1 is configured to operate by the system power supply voltage Vcc2 generated from the power supply BAT. As described above, the system power supply voltage Vcc2 is also generated (output) by the LSW 4 when the inhaler 100 operates in the sleep mode. In this regard, as described above, the system power supply voltage Vcc3 is not generated (output) by the LSW 5 when the inhaler 100 operates in the sleep mode. In the inhaler 100, the number of electronic components that operate by the system power supply voltage Vcc2 that is also generated during the sleep mode is greater than the number of electronic components that operate by the system power supply voltage Vcc3 that is not generated in the sleep mode. More specifically, in the inhaler 100, the electronic components that operate by the system power supply voltage Vcc2 include the MCU 1, the LSW 5, the Hall IC 13, the communication IC 15, the Hall IC 14, the remaining amount meter IC 12, the ROM 6, and the like. In this regard, there are three electronic components, thermistors T2 to T4 that operate by the system power supply voltage Vcc3. When comparing the number of electronic components that operate by the system power supply voltage Vcc2 and the number of electronic components that operate by the system power supply voltage Vcc3, it should be noted that integrated circuits such as the MCU 1, the Hall IC 13, the communication IC 15, the Hall IC 14, the remaining amount meter IC 12, and the ROM 6 are set as one electronic component.

That is, in the inhaler 100 of the inhalation system that becomes hot during use, from a viewpoint of ensuring safety, by supplying power (that is, the operating voltage) to the main electronic components of the inhaler 100 also during the sleep mode, it is preferable to monitor the state of the inhaler 100 and prevent the inhaler 100 from performing an unintended behavior. On the other hand, if the power is also supplied to all the electronic components of the inhaler 100 in the sleep mode, the power consumed in the inhaler 100 cannot be reduced during the sleep mode.

Therefore, the number of electronic components that operate by the system power supply voltage Vcc2 that is also generated during the sleep mode is made greater than the number of electronic components that operate by the system power supply voltage Vcc3 that is not generated in the sleep mode. In other words, the number of electronic components which operate during the sleep mode is made smaller than that in normal time (a time other than the sleep mode). Accordingly, the number of electronic components that operate during the sleep mode may be limited to an appropriate number. In addition, it is possible to secure the safety of the inhaler 100 while reducing the power consumed by the inhaler 100 during the sleep mode. The system power supply voltage Vcc2 is an example of a system voltage.

In the inhaler 100, the system power supply voltage Vcc3 is generated from the system power supply voltage Vcc2 used to cause the MCU 1 to operate. Accordingly, the system power supply voltage Vcc2 and the system power supply voltage Vcc3 may be implemented by a simple circuit configuration. Therefore, it is possible to avoid that the circuit configuration of the inhaler 100 becomes complicated, that the size of the inhaler 100 increases, and that a manufacturing cost of the inhaler 100 increases.

In the inhaler 100, a voltage value of the system power supply voltage Vcc3 is equal to a voltage value of the system power supply voltage Vcc2. As a specific example, the voltage value of the system power supply voltage Vcc3 and the voltage value of the system power supply voltage Vcc2 are 3.3 V Accordingly, the system power supply voltage Vcc2 and the system power supply voltage Vcc3 may be implemented by a simple circuit configuration. Therefore, it is possible to avoid that the circuit configuration of the inhaler 100 becomes complicated, that the size of the inhaler 100 increases, and that the manufacturing cost of the inhaler 100 increases.

In the inhaler 100, the LSW 5, which is an example of an accessory switch, is connected to the power supply line PL2 that supplies the system power supply voltage Vcc2 to the MCU 1, and is configured to output the system power supply voltage Vcc3 having a voltage value equal to that of the system power supply voltage Vcc2 received via the power supply line PL2. If the voltage values of the system power supply voltage Vcc2 and the system power supply voltage Vcc3 are different, in order to generate the system power supply voltage Vcc3 from the system power supply voltage Vcc2, a voltage conversion element such as the step-up and step-down DC/DC converter is required. In this regard, in the inhaler 100, since the voltage value of the system power supply voltage Vcc2 and the system power supply voltage Vcc3 are equal, the system power supply voltage Vcc3 may be generated from the system power supply voltage Vcc2 by the LSW 5, which is not a voltage conversion element. Therefore, the system power supply voltage Vcc2 and the system power supply voltage Vcc3 may be implemented by a simple circuit configuration, and it is possible to avoid that the circuit configuration of the inhaler 100 becomes complicated, that the size of the inhaler 100 increases, and that the manufacturing cost of the inhaler 100 increases.

The inhaler 100 may operate by the system power supply voltage Vcc4 different from the system power supply voltage Vcc3, and has the LEDs L1 to L8 which are electronic components separate from the MCU 1 and the thermistors T2 to T4. When the inhaler 100 operates in the sleep mode, the system power supply voltage Vcc4 is not supplied to the LEDs L1 to L8. Accordingly, even if the LEDs L1 to L8, which are electronic components that operate by the system power supply voltage Vcc4 different from the system power supply voltage Vcc3, are provided, the LEDs L1 to L8 may be restricted from operating (that is, consuming power) during the sleep mode. Therefore, it is possible to improve a functionality of the inhaler 100 by the LEDs L1 to L8 in a time other than the sleep mode while reducing the power consumed by the inhaler 100 during the sleep mode. The LEDs L1 to L8 are examples of a second electronic component, and the system power supply voltage Vcc4 is an example of the second accessory voltage.

In the inhaler 100, the voltage value of the system power supply voltage Vcc3 is different from a voltage value of the system power supply voltage Vcc4. As a specific example, the voltage value of the system power supply voltage Vcc4 is 5.0 V Accordingly, a voltage suitable for causing the electronic components to operate may be supplied to the electronic components such as the thermistors T2 to T4 and the LEDs L1 to L8. Therefore, the electronic components such as the thermistors T2 to T4 and the LEDs L1 to L8 can appropriately operate, and the inhaler 100 may be made highly functional.

In the inhaler 100, the system power supply voltage Vcc3 supplied to the thermistors T2 to T4 is generated from the system power supply voltage Vcc2 used to cause the MCU 1 to operate. On the other hand, the system power supply voltage Vcc4 supplied to the LEDs L1 to L8 is not generated from the system power supply voltage Vcc2. As described above, the voltage value of the system power supply voltage Vcc3 is equal to the voltage value of the system power supply voltage Vcc2 and is different from the voltage value of the system power supply voltage Vcc4. In other words, the voltage value of the system power supply voltage Vcc4 is different from the voltage value of the system power supply voltage Vcc2. In this way, the system power supply voltage Vcc3 whose voltage value is equal to that of the system power supply voltage Vcc2 is generated from the system power supply voltage Vcc2, while the system power supply voltage Vcc4 whose voltage value is different from that of the system power supply voltage Vcc2 is not generated from the system power supply voltage Vcc2, so that the system power supply voltage Vcc2, the system power supply voltage Vcc3, and the system power supply voltage Vcc4 may be implemented by a simple circuit configuration. Therefore, it is possible to avoid that the circuit configuration of the inhaler 100 becomes complicated, that the size of the inhaler 100 increases, and that the manufacturing cost of the inhaler 100 increases.

In the inhaler 100, the system power supply voltage Vcc4 supplied to the LEDs L1 to L8 is generated from the USB voltage V_{USB} output from the LSW 3 and the voltage generated by the OTG function of the charging IC 2 (the voltage based on the power supply voltage V_{BAT}). In other words, the system power supply voltage Vcc4 may also be generated from the voltage supplied from the receptacle RCP. Therefore, even when the power supply BAT cannot be used, such as when overdischarging occurs, the LEDs L1 to L8 may operate such that the user may use the functions of the inhaler 100 implemented by the LEDs L1 to L8.

According to the inhaler 100, the voltage is not directly supplied from the power supply BAT to the LEDs L1 to L8 as the notification portion, but is supplied via the charging IC 2. Although the voltage of the power supply BAT fluctuates, the fluctuating voltage is not directly supplied to the LEDs L1 to L8, so that the LEDs L1 to L8 may be stably operated. The luminance of the LEDs depends on the supplied voltage, the luminance of the LEDs L1 to L8 may be stabilized in a case where a stable voltage may be supplied to the LEDs L1 to L8. Since the charging IC 2, whose main function is to control the charging of the power supply BAT, generates the system power supply voltage Vcc4 and supplies the system power supply voltage Vcc4 to the LEDs L1 to L8, there is no need for a dedicated IC for generating the system power supply voltage Vcc4. Therefore, the size and cost of the inhaler 100 may be reduced. Since the charging IC 2 steps up the power supply voltage V_{BAT} to generate the system power supply voltage Vcc4, high-voltage power may be supplied to the LEDs L1 to L8. Accordingly, the LEDs L1 to L8 may be turned on with high luminance, and a good user interface may be achieved.

According to the inhaler 100, the power is supplied to the MCU 1 via the charging IC 2 instead of directly being supplied to the MCU 1 from the power supply BAT. Since the charging IC 2, whose main function is to control the charging of the power supply BAT, generates the system power supply voltage Vcc0 and supplies the system power supply voltage Vcc0 to the MCU 1, there is no need for a dedicated IC for generating the system power supply voltage Vcc0. Therefore, the size and cost of the inhaler 100 may be reduced. Since the step-up and step-down DC/DC converter 8 is provided between the charging IC 2 and the MCU 1, constant power may be supplied to the MCU 1. Accordingly, the operation of the MCU 1 may be stabilized.

According to the inhaler 100, the OTG function cannot be executed when the USB connection is established and the LSW 3 is closed. Therefore, power consumption of the power supply BAT during the USB connection may be prevented, and a usable power amount of the power supply BAT may be increased. Since the LSW 3 is open immediately after the USB connection is established, the noise and rush current immediately after the USB connection is established are not supplied to the LEDs L1 to L8, and a possibility of failure in the LEDs L1 to L8 may be reduced. The OTG function may be executed immediately after the USB connection is established. Therefore, even in a transition period during which power cannot be supplied from the external power supply to the LEDs L1 to L8 immediately after the USB connection is established, power may be supplied from the power supply BAT to the LEDs L1 to L8 by the OTG function. Therefore, an opportunity to cause the LEDs L1 to L8 to operate may be increased, and marketability of the inhaler 100 may be improved.

According to the inhaler 100, the charging IC 2 may supply the power of the power supply BAT to a load such as the MCU 1, and thus, a dedicated IC for supplying the power to the load becomes unnecessary, and the cost of the inhaler 100 may be reduced.

A notification portion other than the LEDs L1 to L8 may be further connected to the input terminal VBUS of the charging IC 2. For example, the input terminal VBUS of the charging IC 2 and the vibration motor M may be connected, and the system power supply voltage Vcc4 and the USB voltage V_{USB} are supplied to the vibration motor M, or the input terminal VBUS of the charging IC 2 and a speaker (not shown) may be connected, and the system power supply voltage Vcc4 and the USB voltage V_{USB} are supplied to the speaker. An IC other than the notification portion (an IC separate from the IC shown in Fig. 10) may be connected to the input terminal VBUS of the charging IC 2. It is preferable that at least one of the notification portion and the separate IC, as a load, is connected to the input terminal VBUS of the charging IC 2.

The inhaler 100 has a first discharging path that supplies the power from the power supply BAT to the MCU 1 via the charging IC 2, and a second discharging path that supplies the power from the power supply BAT to the heater HTR without passing through the charging IC 2. Therefore, a value of a current to flow through the first discharging path (the maximum current that may be output by the output terminal SYS of the charging IC 2) may be smaller than a value of a current to flow through the second discharging path. Therefore, an expensive and large-scale charging IC 2 that may withstand a large current becomes unnecessary, and the size and cost of the inhaler 100 may be reduced. The MCU 1 and the heater HTR may operate simultaneously, and when the MCU 1 and the heater HTR operate simultaneously, existence of the first discharging path and the second discharging path also allows sufficient power to be supplied to the MCU 1 and the heater HTR without imposing an excessive load on the charging IC 2.

According to the inhaler 100, the second discharging path through which a large current flows is provided on a board separate from the first discharging path. Specifically, the first discharging path is provided on the MCU mounting board 161 and the second discharging path is provided on the receptacle mounting board 162. Therefore, heat concentration on one board may be avoided, and durability of the inhaler 100 may be improved.

According to the inhaler 100, all the electronic components that receive the power supply from the power supply BAT without passing through the charging IC 2 are provided on the same board (the receptacle mounting board 162). Therefore, it is possible to prevent the electric circuit from becoming complicated.

According to the inhaler 100, the step-up DC/DC converter 9 is provided in a discharging path that discharges the power from the power supply BAT to the heater HTR. Therefore, large power may be supplied to the heater HTR by the step-up DC/DC converter 9 without worry about the maximum current of the output terminal SYS of the charging IC 2. Therefore, it is possible to efficiently heat the rod 500 by the heater HTR while reducing the cost and size of the inhaler 100.

The inhaler 100 has a discharging path (a path from the receptacle RCP to the LEDs L1 to L8) that discharges power to the LEDs L1 to L8 without passing through the charging IC 2 during the USB connection. Accordingly, the expensive and large-scale charging IC 2 that may withstand a large current is not required compared to a case of providing a path that discharges power from the external power supply to the LEDs L1 to L8 via the charging IC 2. Therefore, the cost and size of the inhaler 100 may be reduced.

In the inhaler 100, the electronic component connected to the input terminal VBUS of the charging IC 2 is a notification portion such as the LEDs L1 to L8, or an IC separate from the shown ICs. Therefore, power from the external power supply, which is prone to the noise and rush current, may be prevented from being supplied to precision electronic components such as the MCU 1, the step-up and step-down DC/DC converter 8, the ROM 6, the remaining amount meter IC 12, the protection IC 10, and the step-up DC/DC converter 9, and the durability can be improved.

In the inhaler 100, the overvoltage protection IC 11 is provided between the LSW 3 and the receptacle RCP. Due to the presence of the overvoltage protection IC 11, not only the LSW 3 but also the overvoltage protection IC 11 can block the noise and rush current that may occur at the moment of establishing the USB connection. Accordingly, the durability of the inhaler 100 may be improved.

The inhaler 100 is configured such that each of the LEDs L1 to L8 does not operate unless a built-in switch of the MCU 1 is turned on. Therefore, it is possible to prevent the noise and rush current immediately after the USB connection is established from being supplied to the LEDs L 1 to L8, and reduce the possibility of failure in the LEDs L1 to L8. Since the switch is built in the MCU 1, the durability of the switch may be improved as compared with that in the case where the switch is provided outside the MCU 1.

Among the voltages supplied to the load by the inhaler 100, the system power supply voltage Vcc4 and the drive voltage V_{bst} are the larger voltages. The system power supply voltage Vcc4 is generated from the power from the external power supply and the power from the power supply BAT. On the other hand, the drive voltage V_{bst} is generated only by the power from the power supply BAT. In this way, the drive voltage V_{bst} is not generated from the power of the external power supply, so that a line through which high-voltage power flows may be prevented from becoming complicated. Accordingly, since a complicated circuit is avoided, the cost of the inhaler 100 may be reduced. A power supply path to which power including the system power supply voltage Vcc4 is supplied and a power supply path to which power including the drive voltage V_{bst} is supplied are present on different boards. Specifically, the power supply path to which the power including the system power supply voltage Vcc4 is supplied is provided in the MCU mounting board 161 and the LED mounting board 163. The power supply path to which the power including the driving voltage V_{bst} is supplied is provided in the receptacle mounting board 162. In this way, by providing the two power supply paths to which a high voltage is applied on different boards, it is possible to prevent that noise of these power supply paths is superimposed and becomes more difficult to deal with. Therefore, the inhaler 100 may stably operate.

In the inhaler 100, the power supply connector connected to the power supply BAT, the receptacle RCP connected to the external power supply, and the heater connector Cn connected to the heater HTR are provided on the same board (the receptacle mounting board 162). Accordingly, the generation of heat at various locations in the inhaler 100 is prevented, and thus, the durability of the inhaler 100 is improved.

Although various embodiments have been described above with reference to the drawings, it goes without saying that the present invention is not limited to such examples. It is apparent to those skilled in the art that various modifications or corrections can be conceived within the scope described in the claims, and it is understood that the modifications or corrections naturally fall within the technical scope of the present invention.

For example, a connector may be configured to be connected between the output terminal VOUT of the step-up DC/DC converter 9 and the ground line to connect a heater other than the heater HTR (a heating object is different from the heater HTR) or other loads.

In Fig. 10, the parallel circuit of the circuit including the switch S3 and the circuit including the switch S4 and the resistor Rs is connected between the output terminal VOUT of the step-up DC/DC converter 9 and the positive electrode side of the heater connector Cn, but this parallel circuit may be connected between the negative electrode side of the heater connector Cn and the switch S6, and the output terminal VOUT of the step-up DC/DC converter 9 and the positive electrode side of the heater connector Cn may be directly connected.

The MCU 1 itself may also operate in the predetermined sleep mode when the inhaler 100 operates in the sleep mode. In the sleep mode of the MCU 1 itself, for example, a frequency of the processor clock included in the MCU 1 may be lowered than that in normal, or a predetermined function among the various functions of the MCU 1 may be turned off. The MCU 1 itself operates in the sleep mode in accordance with the sleep mode of the inhaler 100 in this way, so that it is possible to reduce the power consumed by the MCU 1 when the inhaler 100 is in the sleep mode. When the MCU 1 operates in the sleep mode (that is, on a condition that the MCU 1 operates in the sleep mode), the system power supply voltage Vcc3 may not be supplied to the thermistors T2 to T4, or the LSW 5 may be turned off (that is, the system power supply voltage Vcc3 is not generated).

In the present description, at least the following matters are described. In parentheses, corresponding constituent components and the like in the embodiment described above are indicated, but the present invention is not limited thereto.
(1) A power supply unit for an aerosol generation device (inhaler 100) configured to operate in a sleep mode, including:
   a power supply (power supply BAT);
   a heater connector (heater connector Cn) to which a heater configured to heat an aerosol source by consuming power supplied from the power supply is connected;
   a controller (MCU 1) configured to control a supply of the power from the power supply to the heater; and
   a first electronic component (thermistors T2, T3, T4) configured to operate by a first accessory voltage (system power supply voltage Vcc3) generated from the power supply and separating from the controller, in which
   the first accessory voltage is not supplied to the first electronic component when the power supply unit operates in the sleep mode.
   According to (1), as the first accessory voltage is not supplied to the first electronic component when the power supply unit operates in the sleep mode, the power consumed by the first electronic component during the sleep mode may be reduced, and the power consumed by the power supply unit during the sleep mode may be reduced.
(2) The power supply unit for an aerosol generation device according to (1), further including:
   an accessory switch (LSW5) configured to supply the first accessory voltage to the first electronic component only when the accessory switch is turned on, in which
   the controller is configured to control the accessory switch, and turns off the accessory switch when the power supply unit operates in the sleep mode.
   According to (2), the controller turns off the accessory switch configured to supply the first accessory voltage to the first electronic component when the power supply unit operates in the sleep mode. Accordingly, the supply of the first accessory voltage to the first electronic component via the accessory switch may be prevented in the sleep mode. Therefore, the power consumed by the first electronic component during sleep mode may be reduced, and the power consumed in the power supply unit in sleep mode may be reduced.
(3) The power supply unit for an aerosol generation device according to (1) or (2), in which
   the first electronic component does not include an active element.
   According to (3), the active element is not included in the electronic component to which the first accessory voltage is not supplied during the sleep mode, so that it is possible to prevent the active element from being turned on and off when shifting to the sleep mode or returning from sleep mode. Accordingly, it is possible to prevent noise caused by turning on and off the active element, thereby avoiding an unstable operation of the power supply unit due to the noise. Therefore, it is possible to reduce the power consumed in the power supply unit during the sleep mode, and to stabilize the operation of the power supply unit when shifting to the sleep mode or returning from the sleep mode.
(4) The power supply unit for an aerosol generation device according to (3), in which
   the first electronic component includes a thermistor (thermistors T2, T3, T4).
   According to (4), the thermistor (that is, a passive element) that does not easily generate noise even when the thermistor is turned on and off is included in the electronic component to which the first accessory voltage is not supplied in the sleep mode, so that it is possible to reduce the power consumed in the power supply unit during the sleep mode, and to stabilize the operation of the power supply unit when shifting to the sleep mode or returning from the sleep mode.
(5) The power supply unit for an aerosol generation device according to (4), further including:
   an operational amplifier (operational amplifiers OP2, OP3) including a non-inverting input terminal, an inverting input terminal, and a positive power supply terminal, in which one of the non-inverting input terminal and the inverting input terminal is connected to the thermistor, in which
   power is also supplied to the positive power supply terminal of the operational amplifier when the power supply unit operates in the sleep mode.
   According to (5), the power is supplied to the operational amplifier connected to the thermistor even when the power supply unit operates in the sleep mode. Accordingly, it is possible to eliminate a transition state where the operational amplifier is turned from off (a state where the operating voltage is not applied) to on (a state where an operating voltage is applied) before a voltage corresponding to a value of the thermistor (for example, a resistance value) is applied to the input terminals of the operational amplifier along with returning from the sleep mode. Therefore, it is possible to stabilize an output of the operational amplifier when the voltage corresponding to the value of the thermistor is applied to the input terminals of the operational amplifier, and to improve an accuracy of control executed by the power supply unit based on the output of the operational amplifier.
(6) The power supply unit for an aerosol generation device according to any one of (1) to (5), in which
   the controller is configured to operate by a system voltage generated from the power supply,
   the system voltage is also generated when the power supply unit operates in the sleep mode, while the first accessory voltage is not generated when the power supply unit operates in the sleep mode, and
   the number of electronic components operating by the system voltage is greater than the number of electronic components operating by the first accessory voltage.
   If the electronic components that operate in the sleep mode is greatly restricted, there is a risk that the safety of the power supply unit in the sleep mode cannot be sufficiently ensured, or that a behavior of the power supply unit when shifting from the sleep mode to another mode becomes unstable. According to (6), the number of electronic components that operate in the sleep mode may be limited to an appropriate number, the safety of the power supply unit in the sleep mode and the behavior when the mode in which the power supply unit operates shifts from the sleep mode to another mode are improved.
(7) The power supply unit for an aerosol generation device according to any one of (1) to (6), in which
   the controller is configured to operate by a system voltage generated from the power supply, and
   the first accessory voltage is generated from the system voltage.
   According to (7), since the first accessory voltage is generated from the system voltage used to cause the controller to operate, the system voltage and the first accessory voltage may be implemented by a simple circuit configuration. Therefore, it is possible to avoid that the circuit configuration of the power supply unit becomes complicated, that a size of the power supply unit is increased and that a manufacturing cost of the power supply unit is increased.
(8) The power supply unit for an aerosol generation device according to (7), in which
   a voltage value of the first accessory voltage is equal to a voltage value of the system voltage.
   According to (8), since the voltage value of the first accessory voltage is equal to the voltage value of the system voltage, the system voltage and the first accessory voltage may be implemented by a simple circuit configuration. Therefore, it is possible to avoid that the circuit configuration of the power supply unit becomes complicated, that a size of the power supply unit is increased and that a manufacturing cost of the power supply unit is increased.
(9) The power supply unit for an aerosol generation device according to (8), further including:
   an accessory switch configured to supply the first accessory voltage to the first electronic component only when the accessory switch is turned on; and
   a system voltage line configured to supply the system voltage to the controller, in which
   the accessory switch is connected to the system voltage line.
   According to (9), the accessory switch is connected to the system voltage line configured to supply the system voltage to the controller, and the voltage value of the first accessory voltage is equal to the voltage value of the system voltage, and thus, the system voltage and the first accessory voltage can be implemented by a simple circuit configuration. Therefore, it is possible to avoid that the circuit configuration of the power supply unit becomes complicated, that a size of the power supply unit is increased and that a manufacturing cost of the power supply unit is increased.
(10) The power supply unit for an aerosol generation device according to any one of (1) to (9), further including:
   a second electronic component configured to operate by a second accessory voltage generated from the power supply and different from the first accessory voltage, and separating from the controller and the first electronic component, in which
   the second accessory voltage is not supplied to the second electronic component when the power supply unit operates in the sleep mode.
   According to (10), even if the second electronic component configured to operate by the second accessory voltage is provided, it is possible to restrict the second electronic component from operating (that is, consuming power) during the sleep mode. Therefore, it is possible to increase a functionality of the power supply unit by the second electronic component in times other than the sleep mode while reducing the power consumed in the power supply unit during the sleep mode.
(11) The power supply unit for an aerosol generation device according to (10), in which
   a voltage value of the first accessory voltage is different from a voltage value of the second accessory voltage.
   According to (11), since the voltage value of the first accessory voltage and the voltage value of the second accessory voltage are different, a voltage suitable for operating the electronic component may be supplied to each of the first electronic component and the second electronic component.
(12) The power supply unit for an aerosol generation device according to (10) or (11), in which
   the controller is configured to operate by a system voltage generated from the power supply,
   a voltage value of the first accessory voltage is equal to a voltage value of the system voltage,
   the first accessory voltage is generated from the system voltage, and
   the second accessory voltage is not generated from the system voltage.
   According to (12), the first accessory voltage whose voltage value is equal to the system voltage is generated from the system voltage, and the second accessory voltage whose voltage value is different from the first accessory voltage (that is, the system voltage) is not generated from the system voltage, so that the system voltage, the first accessory voltage, and the second accessory voltage may be implemented by a simple circuit configuration. Accordingly, it is possible to avoid that the circuit configuration of the power supply unit becomes complicated, that a size of the power supply unit is increased and that a manufacturing cost of the power supply unit is increased.
(13) The power supply unit for an aerosol generation device according to (10) to (12), further including:
   a receptacle (charging terminal 134, receptacle RCP) configured to be electrically connected to an external power supply, in which
   the second accessory voltage is configured to be generated from a voltage supplied from the receptacle.

According to (13), since the second accessory voltage may be generated from the voltage supplied from the receptacle, the second electronic component may be operated even when the power supply cannot be used, such as during overdischarging, so that a user may use a function of the power supply unit implemented by the second electronic component.

Although various embodiments have been described above with reference to the drawings, it goes without saying that the present invention is not limited to such examples. It is apparent to those skilled in the art that various modifications or corrections can be conceived within the scope described in the claims, and it is understood that the modifications or corrections naturally fall within the technical scope of the present invention. In addition, respective constituent elements in the above embodiment may be optionally combined without departing from the gist of the invention.

The present application is based on a Japanese patent application (Japanese Patent Application No. 2021-079912) filed on May 10, 2021, and contents thereof are incorporated herein by reference.

### REFERENCE SIGNS LIST

100 inhaler
HTR heater
BAT power supply
Cn heater connector
RCP receptacle
2 charging IC
L1 to L8 LED

## Claims

1. A power supply unit for an aerosol generation device configured to operate in a sleep mode, comprising:
a power supply;
a heater connector to which a heater configured to heat an aerosol source by consuming power supplied from the power supply is connected;
a controller configured to control a supply of the power from the power supply to the heater; and
a first electronic component configured to operate by a first accessory voltage generated from the power supply and separating from the controller, wherein
the first accessory voltage is not supplied to the first electronic component when the power supply unit operates in the sleep mode.

2. The power supply unit for an aerosol generation device according to claim 1, further comprising:
an accessory switch configured to supply the first accessory voltage to the first electronic component only when the accessory switch is turned on, wherein
the controller is configured to control the accessory switch, and turns off the accessory switch when the power supply unit operates in the sleep mode.

3. The power supply unit for an aerosol generation device according to claim 1 or 2, wherein
the first electronic component does not include an active element.

4. The power supply unit for an aerosol generation device according to claim 3, wherein
the first electronic component includes a thermistor.

5. The power supply unit for an aerosol generation device according to claim 4, further comprising:
an operational amplifier including a non-inverting input terminal, an inverting input terminal, and a positive power supply terminal, in which one of the non-inverting input terminal and the inverting input terminal is connected to the thermistor, wherein
power is also supplied to the positive power supply terminal of the operational amplifier when the power supply unit operates in the sleep mode.

6. The power supply unit for an aerosol generation device according to any one of claims 1 to 5, wherein
the controller is configured to operate by a system voltage generated from the power supply,
the system voltage is also generated when the power supply unit operates in the sleep mode, while the first accessory voltage is not generated when the power supply unit operates in the sleep mode, and
the number of electronic components operating by the system voltage is greater than the number of electronic components operating by the first accessory voltage.

7. The power supply unit for an aerosol generation device according to any one of claims 1 to 6, wherein
the controller is configured to operate by a system voltage generated from the power supply, and
the first accessory voltage is generated from the system voltage.

8. The power supply unit for an aerosol generation device according to claim 7, wherein
a voltage value of the first accessory voltage is equal to a voltage value of the system voltage.

9. The power supply unit for an aerosol generation device according to claim 8, further comprising:
an accessory switch configured to supply the first accessory voltage to the first electronic component only when the accessory switch is turned on; and
a system voltage line configured to supply the system voltage to the controller, wherein
the accessory switch is connected to the system voltage line.

10. The power supply unit for an aerosol generation device according to any one of claims 1 to 9, further comprising:
a second electronic component configured to operate by a second accessory voltage generated from the power supply and different from the first accessory voltage, and separating from the controller and the first electronic component, wherein
the second accessory voltage is not supplied to the second electronic component when the power supply unit operates in the sleep mode.

11. The power supply unit for an aerosol generation device according to claim 10, wherein
a voltage value of the first accessory voltage is different from a voltage value of the second accessory voltage.

12. The power supply unit for an aerosol generation device according to claim 10 or 11, wherein
the controller is configured to operate by a system voltage generated from the power supply,
a voltage value of the first accessory voltage is equal to a voltage value of the system voltage,
the first accessory voltage is generated from the system voltage, and
the second accessory voltage is not generated from the system voltage.

13. The power supply unit for an aerosol generation device according to any one of claims 10 to 12, further comprising:
a receptacle configured to be electrically connected to an external power supply, wherein
the second accessory voltage is configured to be generated from a voltage supplied from the receptacle.
